(19) Europäisches Patentamt
European Patent Office
Office européen des brevets

(11) EP 4 632 146 A1

(12) **EUROPEAN PATENT APPLICATION**
published in accordance with Art. 153(4) EPC

(43) Date of publication:
**15.10.2025 Bulletin 2025/42**

(21) Application number: **25735049.6**

(22) Date of filing: **24.01.2025**

(51) International Patent Classification (IPC):
***D21H 17/37*** *(2006.01)* ***C08L 33/06*** *(2006.01)*
***C08L 97/00*** *(2006.01)* ***C08L 101/00*** *(2006.01)*
***D21H 21/14*** *(2006.01)* ***D21J 3/00*** *(2006.01)*

(52) Cooperative Patent Classification (CPC):
**C08F 220/34; C08L 33/06; C08L 33/14; C08L 97/00; C08L 101/00; D21H 17/37; D21H 21/14; D21J 3/00; D21J 5/00**

(86) International application number:
**PCT/JP2025/002276**

(87) International publication number:
**WO 2025/159197 (31.07.2025 Gazette 2025/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.01.2024 JP 2024008995**

(71) Applicant: **Daikin Industries, Ltd.**
**Osaka-shi, Osaka 530-0001 (JP)**

(72) Inventors:
- **SHIBATA, Shun**
  **Osaka-shi, Osaka 530-0001 (JP)**
- **UEHARA, Tetsuya**
  **Osaka-shi, Osaka 530-0001 (JP)**
- **NAKAMURA, Hisako**
  **Osaka-shi, Osaka 530-0001 (JP)**
- **TANAKA, Asaka**
  **Osaka-shi, Osaka 530-0001 (JP)**

(74) Representative: **Hoffmann Eitle**
**Patent- und Rechtsanwälte PartmbB**
**Arabellastraße 30**
**81925 München (DE)**

# (54) OIL-RESISTANT AGENT FOR PULP

(57) Provided is an novel oil-resistant agent for pulp, comprising a hydrocarbon group-containing polymer, wherein
the hydrocarbon group-containing polymer has a repeating unit derived from a monomer (a1),
the monomer (a1) is a hydrocarbon group-containing monomer having an NH group-containing group and a hydrocarbon group having 6 or more and 40 or less carbon atoms, and
an amount of the repeating unit derived from the monomer (a1) is more than 90% by weight relative to the polymer, which can impart oil resistance to a substrate (in particular, a pulp substrate).

EP 4 632 146 A1

## Description

Technical Field

The present disclosure relates to a repellent agent, in particular, an oil-resistant agent for pulp.

Background Art

Patent Literature 1 discloses an oil-resistant agent containing a hydrocarbon group-containing polymer having a repeating unit formed from a monomer having an NH group-containing group and a hydrocarbon group having 1 to 40 carbon atoms in an amount of 80% by weight or more relative to the polymer.

Citation List

Patent Literature

[Patent Literature 1] Japanese Patent Laid-Open No. 2023-10656

Summary of Invention

Technical Problem

In Patent Literature 1, the case in which the ratio of the hydrocarbon group-containing monomer is particularly high is not specifically considered.

An object of the present disclosure is to provide a novel oil-resistant agent that can impart oil resistance to a substrate (in particular, a pulp substrate).

Solution to Problem

The present disclosure includes the following embodiments.

[Item 1]

An oil-resistant agent for pulp, comprising a hydrocarbon group-containing polymer, wherein

the hydrocarbon group-containing polymer has a repeating unit derived from a monomer (a1),
the monomer (a1) is a hydrocarbon group-containing monomer having an NH group-containing group and a hydrocarbon group having 6 or more and 40 or less carbon atoms, and
an amount of the repeating unit derived from the monomer (a1) is more than 90% by weight relative to the polymer.

[Item 2]

The oil-resistant agent for pulp according to item 1, wherein the hydrocarbon group-containing polymer does not have a fluorine atom.

[Item 3]

The oil-resistant agent for pulp according to item 1 or 2, wherein the monomer (a1) is a monomer represented by the formula (a1):

$$CH_2=C(-X^{a1})-C(=O)-Y^{a11}-Z(-Y^{a12}-R^{a1})_n$$

wherein $R^{a1}$ is each independently a hydrocarbon group having 6 or more and 40 or less carbon atoms;
$X^{a1}$ is a hydrogen atom, a monovalent organic group or a halogen atom;
$Y^{a11}$ is -O- or -NH-;
$Y^{a12}$ is each independently a direct bond or a group composed of at least one selected from -O-, -C(=O)-, $-S(=O)_2-$, -NH- and $-CH_2-$;
Z is a direct bond or a divalent or trivalent hydrocarbon group having 1 to 5 carbon atoms; and

n is 1 or 2.

[Item 4]

The oil-resistant agent for pulp according to any one of items 1 to 3, wherein an amount of the repeating unit derived from the monomer (a1) is more than 97% by weight relative to the polymer.

[Item 5]

The oil-resistant agent for pulp according to any one of items 1 to 4, wherein

an amount of a repeating unit derived from a monomer (b) is 0% by weight or more and less than 7% by weight relative to the polymer, and
the monomer (b) is a hydrophilic monomer having an oxyalkylene-containing group as a hydrophilic group.

[Item 6]

The oil-resistant agent for pulp according to any one of items 1 to 5, wherein

an amount of a repeating unit derived from a monomer (c) is 0% by weight or more and less than 3% by weight relative to the polymer, and
the monomer (c) is an ionic group-containing monomer.

[Item 7]

The oil-resistant agent for pulp according to any one of items 1 to 6, wherein the hydrocarbon group-containing polymer is a polymer obtained by emulsion polymerization.

[Item 8]

The oil-resistant agent for pulp according to any one of items 1 to 7, comprising a dispersant.

[Item 9]

The oil-resistant agent for pulp according to any one of items 1 to 8, comprising an anionic dispersant.

[Item 10]

The oil-resistant agent for pulp according to any one of items 1 to 9, comprising a lignin compound.

[Item 11]

The oil-resistant agent for pulp according to any one of items 1 to 10, comprising an aqueous medium.

[Item 12]

The oil-resistant agent for pulp according to claim 3, wherein $Y^{a12}$ is -NH-C(=O)-, -C(=O)-NH-, -O-C(=O)-NH-, -NH-C(=O)-O- or -NH-C(=O)-NH-.

[Item 13]

A pulp composition comprising a pulp substrate and the oil-resistant agent for pulp according to any one of items 1 to 12.

[Item 14]

The pulp composition according to item 13, comprising an additive for pulp that is at least one selected from the group consisting of a sizing agent, a paper strength agent and a fixing agent.

[Item 15]

An oil-resistant pulp product wherein the hydrocarbon group-containing polymer in the oil-resistant agent for pulp according to any one of items 1 to 12 is adhered to a pulp substrate.

[Item 16]

The oil-resistant pulp product according to item 15, which is a pulp molded article.

[Item 17]

The oil-resistant pulp product according to item 15 or 16, which is a food packaging material or a food container.

[Item 18]

A method for producing an oil-resistant pulp product, comprising treating a pulp substrate with the oil-resistant agent according to any one of items 1 to 12 by an external addition treatment or an internal addition treatment.

[Item 19]

The method for producing an oil-resistant pulp product according to item 18, comprising filling a mold with the oil-resistant agent and pulp slurry, and allowing a liquid medium to permeate out of the mold to mold pulp.

Advantageous Effect of Invention

The present disclosure can impart oil resistance to a substrate (in particular, a pulp substrate).

Description of Embodiments

<Definition of Terms>

As used herein, the "n valent group" refers to a group having n bonds, i.e., a group forming n bonds. The "n valent organic group" refers to a n valent group containing carbon. Such organic groups are not limited, but can be hydrocarbon groups or derivatives thereof. The derivative of the hydrocarbon group refers to a group that has one or more of N, O, S, Si, amide, sulfonyl, siloxane, carbonyl, carbonyloxy, halogen and the like at the end or in the molecular chain of a hydrocarbon group.

As used herein, the "hydrocarbon group" refers to a group containing carbon and hydrogen and a group in which a hydrogen atom is removed from the hydrocarbon. Such hydrocarbon groups are not limited, but include $C_{1-20}$ hydrocarbon groups, such as an aliphatic hydrocarbon group and an aromatic hydrocarbon group. The above "aliphatic hydrocarbon group" may be either linear, branched, or cyclic, and may be either saturated or unsaturated. The hydrocarbon group may include one or more ring structures. In an explicit term, the hydrocarbon group may be substituted by one or more substituents.

Whether or not the phrases "independently at each occurrence", "independently with each other", "each independently" or similar expressions are explicitly described herein, unless otherwise described that they are exceptions, when a plurality of terms (symbols) that can occur in a chemical structure is defined, such definition is applied independently to each occurrence.

The chemical structures described herein should be understood not to encompass chemical structures that are recognized by those skilled in the art as being chemically impossible or extremely unstable.

<Repellent agent (oil-resistant agent)>

The repellent agent according to the present disclosure can be adhered to a substrate (in particular, a pulp substrate) to impart liquid repellency such as water resistance, oil resistance, water repellency, oil repellency and/or an antifouling property to the substrate, and can also function as a water-resistant agent, an oil-resistant agent, a water-repellent agent, an oil-repellent agent, and/or an antifouling agent. The repellent agent according to the present disclosure is particularly suitable as an oil-resistant agent that imparts oil resistance to a substrate (in particular, a pulp substrate).

Since adhesion of a chemical agent to the surface of a pulp substrate is a reversible reaction, it is thought that the adhesion is less likely to be maintained when shearing is applied. In particular, if stirring is prolonged, shearing is

continually applied, which is thought to be detrimental to fixation of the chemical agent. In spite of this, the present inventors have unexpectedly found that the use of the repellent agent of the present disclosure provides excellent high temperature oil resistance when made into a product (for example, molded pulp), even in the case where the pulp slurry after the addition of the repellent agent is stirred for a long time (for example, 30 minutes or longer).

The repellent agent of the present disclosure contains as an active ingredient a hydrocarbon group-containing polymer that is the liquid-repellent compound described below. The hydrocarbon group-containing polymer itself may be used as a repellent agent, or may be used as a repellent agent in combination with other components.

The repellent agent according to the present disclosure may not have any one selected from the group consisting of a compound having a fluoroalkyl group having 8 or more carbon atoms, a compound having a perfluoroalkyl group having 8 or more carbon atoms, a compound having a fluoroalkyl group having 4 or more carbon atoms, a compound having a perfluoroalkyl group having 4 or more carbon atoms, a compound having a perfluoroalkyl group, a compound having a fluoroalkyl group, and a compound having a fluorine atom. The repellent agent according to the present disclosure can impart liquid repellency to a substrate even when not containing the above fluorine compounds.

The volume abundance ratio of particles of 100 μm or more as measured by the laser diffraction scattering method in the repellent agent of the present disclosure may be 0.1% or more, 0.3% or more, 0.5% or more, 1% or more, 1.5% or more, 3% or more, 4% or more, 5% or more or 10% or more, and may be 50% or less, 30% or less, 20% or less, 15% or less, 10% or less, 5% or less, 3% or less or 1.5% or less. It is preferably 20% or less, and more preferably 5% or less. There is no limitation on the method by which the volume abundance ratio of such particles is brought into the above range, but for example, particles in the raw material and/or dispersion may be made finer by using a crusher, a homogenizer, or the like.

The volume abundance ratio of particles of 10 μm or more as measured by the laser diffraction scattering method in the composition of the present disclosure may be 0.1% or more, 0.3% or more, 0.5% or more, 1% or more, 1.5% or more, 3% or more, 4% or more, 5% or more or 10% or more, and may be 50% or less, 30% or less, 20% or less, 15% or less, 10% or less, 5% or less, 3% or less or 1.5% or less. It is preferably 30% or less, and more preferably 15% or less. There is no limitation on the method by which the volume abundance ratio of such particles is brought into the above range, but for example, particles in the raw material and/or dispersion may be made finer by using a crusher, a homogenizer, or the like.

The volume median diameter as measured by the laser diffraction scattering method in the repellent agent of the present disclosure may be 0.01 μm or more, 0.05 μm or more, 0.1 μm or more, 0.2 μm or more, 0.3 μm or more, 0.4 μm or more, 0.5 μm or more or 0.6 μm or more, and may be 10 μm or less, 5 μm or less, 3 μm or less, 1 μm or less, 0.9 μm or less, 0.8 μm or less, 0.7 μm or less, 0.6 μm or less, 0.5 μm or less, 0.4 μm or less, 0.3 μm or less or 0.2 μm or less. It is preferably 1 μm or less, and in an embodiment, 0.01 μm or more and 1 μm or less. In the present disclosure, the volume median diameter refers to the median diameter (D50) in the volume-based particle size distribution by the laser diffraction scattering method.

The average particle diameter of particles obtained by removing a liquid medium from the repellent agent (for example, oil-resistant agent for pulp), which is a water-dispersed composition, of the present disclosure by natural drying at room temperature, as determined from an observation image by a scanning electron microscope, may be 0.01 μm or more, 0.05 μm or more, 0.1 μm or more, 0.2 μm or more, 0.3 μm or more, 0.4 μm or more, 0.5 μm or more or 0.6 μm or more, and may be 10 μm or less, 5 μm or less, 3 μm or less, 1 μm or less, 0.9 μm or less, 0.8 μm or less, 0.7 μm or less, 0.6 μm or less, 0.5 μm or less, 0.4 μm or less, 0.3 μm or less or 0.2 μm or less. It is preferably 1 μm or less. In order to achieve a particle diameter in the above range, for example, particles in the raw material and/or dispersion may be made finer by using a crusher, a homogenizer, or the like. Note that the room temperature is 20°C to 30°C, in particular 25°C.

The ionic charge density in the repellent agent of the present disclosure may be -1,000 μeq/g or more, -800 μeq/g or more, -600 μeq/g or more, -500 μeq/g or more, -400 μeq/g or more, -250 μeq/g or more, -100 μeq/g or more, -50 μeq/g or more, -25 μeq/g or more, 0 μeq/g or more, 1 μeq/g or more, 25 μeq/g or more, 50 μeq/g or more, 100 μeq/g or more or 200 μeq/g or more, and is preferably -600 μeq/g or more. For example, it may be -400 μeq/g or more, -200 μeq/g or more or - 50 μeq/g or more. Also, it may be 5,000 μeq/g or less, 2,500 μeq/g or less, 1,000 μeq/g or less, 750 μeq/g or less, 600 μeq/g or less, 500 μeq/g or less, 400 μeq/g or less, 350 μeq/g or less, 300 μeq/g or less, 200 μeq/g or less, 100 μeq/g or less or 50 μeq/g or less. It is preferably 1,000 μeq/g or less, more preferably 500 μeq/g or less, such as 300 μeq/g or less, and particularly 100 μeq/g or less. In a preferred embodiment, it may be -1,500 μeq/g or more and 1,500 μeq/g or less, and in particular, may be -1,500 μeq/g or more and 0 μeq/g or less.

The ionic charge density (cationic charge density) is calculated from the following expression (1) by measuring the anion demand of a sample solution with a solid content of 0.1 g/L using a polyvinyl sulfonate potassium solution with a normality of 1/1,000 and a particle charge detector (Mutek PCD-06 manufactured by BTG). Alternatively, the ionic charge density (anionic charge density) is calculated from the following expression (1) by similarly measuring the cation demand using a polydiallyldimethylammonium chloride solution instead of polyvinyl sulfonate potassium.

$$\text{Ionic charge density } (\mu eq/g) = A/B \quad (1)$$

A: Cation demand or anion demand (μeq/L)
B: Sample solution concentration (g/L)

{Hydrocarbon group-containing polymer}

The repellent agent according to the present disclosure contains a hydrocarbon group-containing polymer. The hydrocarbon group-containing polymer according to the present disclosure is adhered to a substrate (in particular, a pulp substrate) to impart liquid repellency such as water resistance, oil resistance, water repellency, oil repellency and/or an antifouling property, in particular oil resistance, to the substrate.

The hydrocarbon group-containing polymer is a polymer formed by polymerizing a vinyl monomer, and develops liquid repellency. Here, the vinyl monomer may be a compound having a polymerizable carbon-carbon double bond (ethylenically unsaturated double bond) (>C=C<), and may be a monomer having a vinyl group, a vinylene group, a vinylidene group, an acryloyl group, a methacryloyl group or a group of derivative thereof.

[Characteristics]

The characteristics that the hydrocarbon group-containing polymer can have will be shown below.

The HD (n-hexadecane) contact angle of the hydrocarbon group-containing polymer may be 10° or more, 20° or more, 25° or more, 30° or more, 35° or more, 40° or more, 45° or more, 50° or more, 55° or more, 60° or more or 65° or more, and is preferably 25° or more, and further preferably 30° or more. Also, it may be 100° or less, 90° or less or 75° or less. A HD contact angle of the hydrocarbon group-containing polymer of the lower limit or more can impart good liquid repellency (in particular, oil repellency) to a substrate. The HD contact angle is a static contact angle of the hydrocarbon group-containing polymer to a spin-coated film, which is obtained by dropping 2 μL of HD on a spin-coated film at room temperature (25°C) and measuring the contact angle one second after the droplet reaches the film.

The water contact angle of the hydrocarbon group-containing polymer is 35° or more, 40° or more, 45° or more, 50° or more, 55° or more, 65° or more, 75° or more, 85° or more, 90° or more or 100° or more, and it may also be 160° or less, 140° or less, 130° or less, 120° or less, 110° or less, 100° or less or 90° or less. A water contact angle of the hydrocarbon group-containing polymer of the lower limit or more can impart good liquid repellency (in particular, water repellency) to a substrate. The water contact angle is a static contact angle of the hydrocarbon group-containing polymer to a spin-coated film, which is obtained by dropping 2 μL of water on a spin-coated film at room temperature (25°C) and measuring the contact angle one second after the droplet reaches the film.

The hydrocarbon group-containing polymer is preferably a biobased compound with carbon of biobased origin. The biobased content is measured in accordance with ASTM D6866. The biobased content may be 20% or more, and is preferably 30% or more, more preferably 50% or more, further preferably 60% or more, further preferably 70% or more, and most preferably 80% or more or 90% or more, such as 100%. The high biobased content refers to less amount of fossil resource-based material used, which is represented by petroleum or the like, and from such a viewpoint, it can be said that the higher the biobased content of the hydrocarbon group-containing polymer, the more preferable it is.

The biodegradability of the hydrocarbon group-containing polymer at the 180-day time point is preferably a biodegradability of 5% or more. The higher the biodegradability, the more preferable it is, since the environmental burden is reduced. The biodegradability of the hydrocarbon group-containing polymer at the 180-day time point may be, for example, 10% or more, 20% or more, 30% or more, 50% or more, 60% or more, 70% or more, 80% or more or 90% or more, and it may be preferably 30% or more, more preferably 50% or more, further preferably 70% or more, and most preferably 80% or more. The biodegradability of the hydrocarbon group-containing polymer at the 60-day time point is preferably a biodegradability of 5% or more. The higher the biodegradability, the more preferable it is, since the environmental burden is reduced. The biodegradability of the hydrocarbon group-containing polymer at the 60-day time point may be, for example, 10% or more, 15% or more, 20% or more, 25% or more, 30% or more, 35% or more, 40% or more or 45% or more, and it may be preferably 10% or more, and more preferably 30% or more. Such a biodegradability may be the biodegradability specified in JIS K 6953-1 or ASTM D6400.

The melting point of the hydrocarbon group-containing polymer may be 30°C or higher, 40°C or higher, 60°C or higher, 80°C or higher, 100°C or higher or 120°C or higher, and is preferably 40°C or higher. It may also be 250°C or lower, 225°C or lower, 200°C or lower, 150°C or lower, 130°C or lower, 120°C or lower, 110°C or lower, 100°C or lower, 80°C or lower or 50°C or lower.

[Structure and others]

The hydrocarbon group-containing polymer according to the present disclosure may not have any one selected from the group consisting of a fluoroalkyl group having 8 or more carbon atoms, a perfluoroalkyl group having 8 or more carbon atoms, a fluoroalkyl group having 4 or more carbon atoms, a perfluoroalkyl group having 4 or more carbon atoms, a

perfluoroalkyl group, a fluoroalkyl group, and a fluorine atom. The hydrocarbon group-containing polymer can impart liquid repellency to a substrate even when not including the above fluorine-containing groups.

The hydrocarbon group-containing polymer may have a weight average molecular weight of 3,000 or more, 5,000 or more, 10,000 or more, 30,000 or more, 100,000 or more, 300,000 or more, or 500,000 or more, and 5,000,000 or less, 3,000,000 or less, 1,000,000 or less, 750,000 or less, 500,000 or less, 300,000 or less, 100,000 or less, 75,000 or less, 50,000 or less, 30,000 or less, 10,000 or less, or 5,000 or less. The weight average molecular weight may be a molecular weight in terms of polystyrene, as measured by GPC.

(a) Hydrocarbon group-containing monomer

The hydrocarbon group-containing polymer may have a repeating unit derived from a hydrocarbon group-containing monomer (a). The monomer (a) has an ethylenically unsaturated double bond and a hydrocarbon group having 6 or more and 40 or less carbon atoms.

The monomer (a) preferably has a (meth)acrylic group as the group having an ethylenically unsaturated double bond, and for example, may have a (meth)acrylate group or a (meth)acrylamide group as the ethylenically unsaturated double bond.

The monomer (a) has a hydrocarbon group having 6 or more and 40 or less carbon atoms. Here, the hydrocarbon group is a monovalent group. The hydrocarbon group which the monomer (a) has may be an aromatic hydrocarbon group or an aliphatic hydrocarbon group, and is preferably an aliphatic hydrocarbon group, and in particular a saturated aliphatic hydrocarbon group (an alkyl group). The hydrocarbon group is branched or linear, and preferably linear. The hydrocarbon group may be saturated or unsaturated. The hydrocarbon group is preferably a saturated aliphatic hydrocarbon group (alkyl group). The hydrocarbon group may have 6 or more, 8 or more, 10 or more, 12 or more, 14 or more, 16 or more, 18 or more, 20 or more, or 22 or more carbon atoms, preferably 10 or more, 12 or more, 14 or more, or 16 or more carbon atoms, and may have 40 or less, 35 or less, 30 or less, 25 or less, 20 or less, 15 or less, or 10 or less carbon atoms, and preferably 30 or less, 25 or less, or 20 or less carbon atoms.

The monomer (a) having a hydrocarbon group having 6 or more and 40 or less carbon atoms is preferably a group represented by the formula: $CH_2=C(-X^a)-C(=O)-Y^a(R^a)_k$ wherein

$R_a$ is each independently a hydrocarbon group having 6 or more and 40 or less carbon atoms,
$X^a$ is a hydrogen atom, a monovalent organic group or a halogen atom,
$Y^a$ is a divalent to tetravalent group having 1 carbon atom (in particular, $-CH_2-$, $-CH(-)_2$), $-C_6H_4-$, or a group composed of at least one selected from -O-, -C(=O)-, $-S(=O)_2-$ and -NH-, and
k is 1 to 3.

$X^a$ may be a hydrogen atom, a methyl group, a halogen excluding a fluorine atom, a substituted or non-substituted benzyl group, or a substituted or non-substituted phenyl group. Examples of $X^a$ include a hydrogen atom, a methyl group, a chlorine atom, a bromine atom, an iodine atom and a cyano group. $X^a$ is preferably a hydrogen atom, a methyl group or a chlorine atom. $X^a$ is particularly preferably a hydrogen atom.

$Y^a$ is a divalent to tetravalent group. $Y^a$ is preferably a divalent group.

$Y^a$ is preferably a hydrocarbon group having 1 carbon atom, $-C_6H_4-$, or a group composed of at least one selected from -O-, -C(=O)-, $-S(=O)_2-$ and -NH- excluding a hydrocarbon group. It is preferable that $Y^a$ is not a hydrocarbon group. Examples of hydrocarbon groups having 1 carbon atom include $-CH_2-$, $-CH(-)_2$ and $-C(-)_3$. A hydrocarbon group having 1 carbon atom may be repeatedly linked to form a hydrocarbon group having 2 or more carbon atoms, such as $-(CH_2)_{m-}$ (m is an integer of 1 to 5). $Y^a$ may have an NH group.

$Y^2$ may be -Y'-, -Y'-Y'-, -Y'-C(=O)-, -C(=O)-Y'-, -Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'-[wherein Y' is a direct bond, -O-, -NH- or $-S(=O)_2-$, and R' is $-(CH_2)_m-$ (wherein m is an integer of 1 to 5), or $-C_6H_4-$ (a phenylene group)].

Specific examples of $Y^a$ include -O-, -NH-, -O-C(=O)-, - C(=O)-NH-, -NH-C(=O)-, -O-C(=O)-NH-, -NH-C(=O)-O-, -NH-C(=O)-NH-, $-O-C_6H_4-$, $-O-(CH_2)_m-O-$, $-NH-(CH_2)_m-NH-$, $-O-(CH_2)_m-NH-$, $-NH-(CH_2)_m-O-$, $-O-(CH_2)_m-O-C(=O)-$, $-O-(CH_2)_m-C(=O)-O-$, $-NH-(CH_2)_m-O-C(=O)-$, $-NH-(CH_2)_m-C(=O)-O-$, $-O-(CH_2)_m-O-C(=O)-NH-$, $-O-(CH_2)_m-NH-C(=O)-O-$, $-O-(CH_2)_m-C(=O)-NH-$, $-O-(CH_2)_m-NH-C(=O)-$, $-O-(CH_2)_m-NH-C(=O)-NH-$, $-O-(CH_2)_m-O-C_6H_4-$, $-O-(CH_2)_m-NH-S(=O)_2-$, $-O-(CH_2)_m-S(=O)_2-NH-$, $-NH-(CH_2)_m-O-C(=O)-NH-$, $-NH-(CH_2)_m-NH-C(=O)-O-$, $-NH-(CH_2)_m-C(=O)-NH-$, $-NH-(CH_2)_m-NH-C(=O)-$, $-NH-(CH_2)_m-NH-C(=O)-NH-$, $-NH-(CH_2)_m-O-C_6H_4-$, $-NH-(CH_2)_m-NH-C_6H_4-$, $-NH-(CH_2)_m-NH-S(=O)_2-$ or $-NH-(CH_2)_m-S(=O)_2-NH-$ [wherein m is 1 to 5, in particular 2 or 4].

Ya is preferably -O-, -NH-, $-O-(CH_2)_m-O-C(=O)-$, $-O-(CH_2)_m-NH-C(=O)-$, $-O-(CH_2)_m-O-C(=O)-NH-$, $-O-(CH_2)_m-NH-C(=O)-O-$, $-O-(CH2)_m-NH-C(=O)-NH-$, $-O-(CH_2)_m-NH-S(=O)_2-$, $-O-(CH_2)_m-S(=O)_2-NH-$, $-NH-(CH_2)_m-NH-S(=O)_2-$ or $-NH-(CH_2)_m-S(=O)_2-NH-$[wherein m is an integer of 1 to 5, in particular 2 or 4]. $Y^a$ is more preferably -O- or $O-(CH_2)_m-NH-C(=O)-$, in particular $-O-(CH_2)_m-NH-C(=O)-$.

$R^a$ is each independently a hydrocarbon group having 6 or more and 40 or less carbon atoms, and is preferably a linear or branched hydrocarbon group. In particular, the hydrocarbon group may be a linear hydrocarbon group. The hydrocarbon group is preferably an aliphatic hydrocarbon group, particularly preferably a saturated aliphatic hydrocarbon group and especially preferably an alkyl group. The hydrocarbon group has preferably 12 to 30, for example, 12 or more and 18 or less, 16 to 26 or 15 to 26, in particular 18 to 22 or 17 to 22 carbon atoms.
Specific examples of the monomer (a) include the monomer (a1) and monomer (a2) described below.

(a1) Monomer

The monomer (a1) is a monomer different from the monomer (a2), and in particular, it is a monomer having an NH group-containing group and a hydrocarbon group having 6 or more and 40 or less carbon atoms.
The monomer (a1) may have an amide group, a urea group, a urethane group or a sulfonamide group. The NH group-containing group may be an amide group, a urea group, a urethane group or a sulfonamide group. The hydrocarbon monomer may be a combination of a hydrocarbon monomer having an amide group, a urea group, a urethane group or a sulfonamide group and a hydrocarbon monomer not having an amide group, a urea group, a urethane group or a sulfonamide group. By including these groups in the monomer (a1), the effect of the present disclosure can be attained well.
The monomer (a1) is (meth)acrylate or (meth)acrylamide having a group composed of at least one selected from -O-, - C(=O)-, $-S(=O)_2-$, -NH- and $-CH_2-$.
The monomer (a1) is a compound represented by the formula:

$$CH_2=C(-X^{a1})-C(=O)-Y^{a11}-Z(-Y^{a12}-R^{a1})_n$$

[wherein $R^{a1}$ is a hydrocarbon group having 6 or more and 40 or less carbon atoms,

$X^{a1}$ is a hydrogen atom, a monovalent organic group or a halogen atom,
$Y^{a11}$ is -O- or -NH-,
$Y^{a12}$ is each independently a direct bond or a group composed of at least one selected from -O-, -C(=O)-, $-S(=O)_2-$, -NH- and $-CH_2-$,
Z is a direct bond or a divalent or trivalent hydrocarbon group having 1 to 5 carbon atoms, and
n is 1 or 2].
$Y^{a12}$ and/or Z may not be a direct bond. $Y^{a12}$ and Z may not be simultaneously a direct bond.

$R^{a1}$ is preferably an aliphatic hydrocarbon group, particularly preferably a saturated aliphatic hydrocarbon group and especially preferably an alkyl group. In $R^{a1}$, the hydrocarbon group has preferably 12 to 30, for example, 16 to 26 or 15 to 26, in particular 18 to 22 or 17 to 22 carbon atoms.
$X^{a1}$ may be a hydrogen atom, a methyl group, a halogen excluding a fluorine atom, a substituted or non-substituted benzyl group, or a substituted or non-substituted phenyl group. $X^{a1}$ is preferably a hydrogen atom, a methyl group or a chlorine atom.
$Y^{a12}$ may be -Y'-, -Y'-Y'-, -Y'-C(=O)-, -C(=O)-Y'-, -Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'- or -Y'-R'-Y'-R'-, [wherein Y' is each independently a direct bond, -O-, -NH- or $-S(=O)_2-$, and R' is $-(CH_2)_m-$ (wherein m is an integer of 1 to 5), a linear hydrocarbon group having 1 to 5 carbon atoms and having an unsaturated bond, a hydrocarbon group having 1 to 5 carbon atoms and having a branched structure or $-(CH_2)_l-C_6H_4-(CH_2)_l-$(wherein l is each independently an integer of 0 to 5 and $-C_6H_4-$ is a phenylene group)].
In particular, $Y^{a12}$ may have an NH group.
Specific examples of $Y^{a12}$ include a direct bond, -O-, -NH-, -O-C(=O)-, -C(=O)-O-, -C(=O)-NH-, -NH-C(=O)-, $-NH-S(=O)_2-$, $-S(=O)_2-NH-$, -O-C(=O)-NH-, -NH-C(=O)-O-, -NH-C(=O)-NH-, $-O-C_6H_4-$, $-NH-C_6H_4-$, $-O-(CH_2)_m-O-$, $-NH-(CH_2)_m-NH-$, $-O-(CH_2)_m-NH-$, $-NH-(CH_2)_m-O-$, $-O-(CH_2)_m-O-C(=O)-$, $-O-(CH_2)_m-C(=O)-O-$, $-NH-(CH_2)_m-O-C(=O)-$, $-NH-(CH_2)_m-C(=O)-O-$, $-O-(CH_2)_m-O-C(=O)-NH-$, $-O-(CH_2)_m-NH-C(=O)-O-$, $-O-(CH_2)_m-C(=O)-NH-$, $-O-(CH_2)_m-NH-C(=O)-$, $-O-(CH_2)_m-NH-C(=O)-NH-$, $-O-(CH_2)_m-O-C_6H_4-$, $-NH-(CH_2)_m-O-C(=O)-NH-$, $-NH-(CH_2)_m-NH-C(=O)-O-$, $-NH-(CH_2)_m-C(=O)-NH-$, $-NH-(CH_2)_m-NH-C(=O)-$, $-NH-(CH_2)_m-NH-C(=O)-NH-$, $-NH-(CH_2)_m-O-C_6H_4-$, $-NH-(CH_2)_m-NH-C_6H_4-$
[wherein m is an integer of 1 to 5].
$Y^{a12}$ is preferably -O-, -NH-, -O-C(=O)-, -C(=O)-O-, -C(=O)-NH-, -NH-C(=O)-, $-NH-S(=O)_2-$, $-S(=O)_2-NH-$, -O-C(=O)-NH-, -NH-C(=O)-O-, -NH-C (=O) -NH-, $-O-C_6H_4-$. $Y^{a12}$ is more preferably -NH-C(=O)-, -C(=O)-NH-, -O-C(=O)-NH-, -NH-C(=O)-O- or -NH-C(=O)-NH-. $Y^{a12}$ may not be a direct bond.
Z is a direct bond or a divalent or trivalent hydrocarbon group having 1 to 5 carbon atoms, and may have a linear structure or a branched structure. Z has preferably 2 to 4, particularly preferably 2 carbon atoms. Specific examples of Z

include a direct bond, $-CH_2-$, $-CH_2CH_2-$, $-CH_2CH_2CH_2-$, $-CH_2CH_2CH_2CH_2-$, $-CH_2CH_2CH_2CH_2CH_2-$, $-CH_2CH(-)_2$, $-CH_2(CH-)CH_2-$, $-CH_2CH_2CH(-)_2$, $-CH_2CH_2CH_2CH_2CH(-)_2$, $-CH_2CH_2(CH-)CH_2-$, and $-CH_2CH_2CH_2CH(-)_2$. Z may not be a direct bond.

The monomer (a1) is preferably $CH_2=C(-X^{a1})-C(=O)-O-(CH_2)_m-NH-C(=O)-R^{a1}$, $CH_2=C(-X^{a1})-C(=O)-O-(CH_2)_m-O-C(=O)-NH-R^{a1}$, $CH_2=C(-X^{a1})-C(=O)-O-(CH_2)_n-NH-C(=O)-O-R^{a1}$, $CH_2=C(-X^{a1})-C(=O)-O-(CH_2)_m-NH-C(=O)-NH-R^{a1}$ [wherein $R^{a1}$ and $X^{a1}$ are as described above] .

The monomer (a1) is particularly preferably $CH_2=C(-X^{a1})-C(=O)-O-(CH_2)_n-NH-C(=O)-R^{a1}$.

The monomer (a1) may be produced by reacting hydroxyalkyl (meth)acrylate or hydroxyalkyl (meth)acrylamide with long chain alkyl isocyanate. Examples of long chain alkyl isocyanate include lauryl isocyanate, myristyl isocyanate, cetyl isocyanate, stearyl isocyanate, oleyl isocyanate and behenyl isocyanate.

The monomer (a1) may also be produced by reacting (meth)acrylate having an isocyanate group in the side chain, such as 2-methacryloyloxyethyl methacrylate, with long chain alkylamine or long chain alkyl alcohol. Examples of long chain alkylamine include laurylamine, myristylamine, cetylamine, stearylamine, oleylamine and behenylamine. Examples of long chain alkyl alcohol include lauryl alcohol, myristyl alcohol, cetyl alcohol, stearyl alcohol, oleyl alcohol and behenyl alcohol.

Preferred examples of monomers (a) are as follows:

Stearyl (meth)acrylate, behenyl (meth)acrylate, stearyl α-chloroacrylate, behenyl α-chloroacrylate;
Stearyl (meth)acrylamide, behenyl (meth)acrylamide;

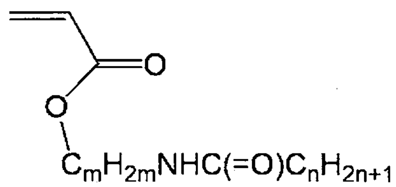

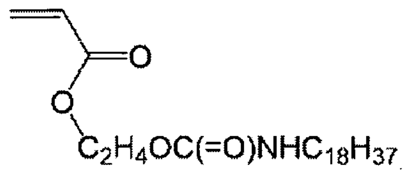

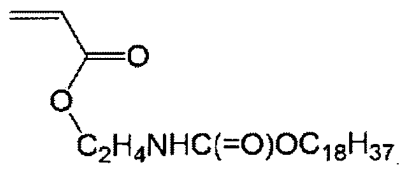

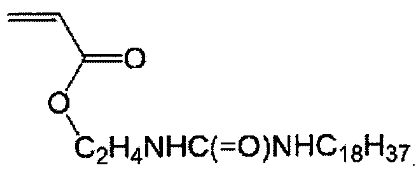

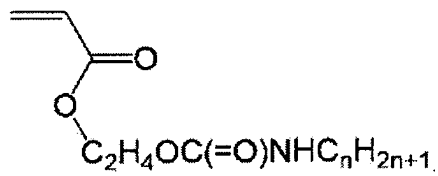

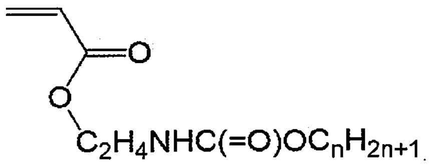

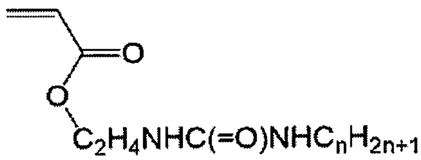

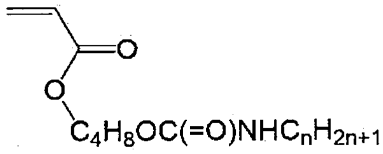

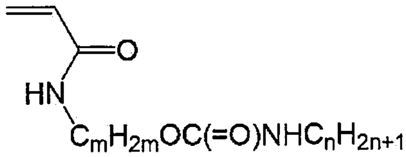

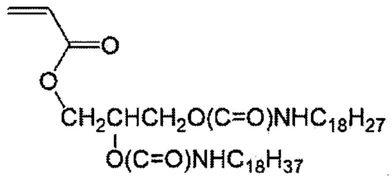

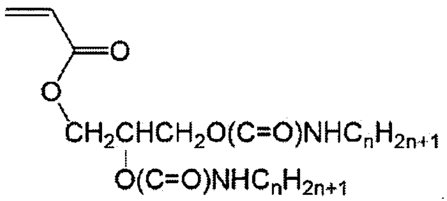

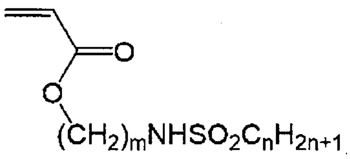

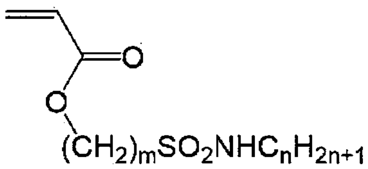

[wherein n is a number of 6 to 40 and m is a number of 1 to 5].

The compounds of the above formula are an acrylic compound having a hydrogen atom at the α position, and specific examples thereof may include a methacrylic compound having a methyl group at the α position and an α-chloroacrylic compound having a chlorine atom at the α position.

The monomer (a1) is preferably an amide-group containing monomer represented by the formula:

$R^{a12}$-C(=O)-NH-$R^{a13}$-O-$R^{a11}$

[wherein $R^{a11}$ is an organic residue having an ethylenically unsaturated polymerizable group,

$R^{a12}$ is a hydrocarbon group having 6 or more and 40 or less carbon atoms, and
$R^{a13}$ is a hydrocarbon group having 1 to 5 carbon atoms].

$R^{a11}$ is an organic residue having an ethylenically unsaturated polymerizable group, and is not limited as long as it has a polymer carbon-carbon double bond. Specific examples thereof include an organic residue having an ethylenically unsaturated polymerizable group, such as -C(=O)$C^{Ra111}$=$CH_2$, - $CHR^{a111}$=$CH_2$ and -$CH_2CHR^{a111}$=$CH_2$, wherein $R^{a111}$ is a hydrogen atom or an alkyl group having 1 to 4 carbon atoms. $R^{a11}$ may have various organic groups other than the ethylenically unsaturated polymerizable group, including, for example, an organic group such as chain hydrocarbon, cyclic hydrocarbon, a polyoxyalkylene group and a polysiloxane group. These organic groups may be substituted by various substituents. $R^{a11}$ is preferably -C(=O)$CR^{a111}$=$CH_2$.

$R^{a12}$ is as described above as a hydrocarbon group possessed by the monomer (a), and is a hydrocarbon group having 6 or more and 40 or less carbon atoms, preferably an alkyl group. Examples thereof include a chain hydrocarbon group and a cyclic hydrocarbon group. Of them, a chain hydrocarbon group is preferred, and a linear saturated hydrocarbon group is particularly preferred. $R^{a12}$ has 6 or more and 40 or less, preferably 11 to 27, and particularly preferably 15 to 23 carbon atoms.

$R^{a13}$ is a hydrocarbon group having 1 to 5 carbon atoms, preferably an alkyl group. The hydrocarbon group having 1 to 5 carbon atoms may be linear or branched, and may have an unsaturated bond, and is preferably linear. $R^{a13}$ has preferably 2 to 4, and particularly preferably 2 carbon atoms. $R^{a13}$ is preferably an alkylene group.

The amide group-containing monomer may be a monomer with only one type of $R^{a12}$ (e.g., a compound with only $R^{a12}$ having 17 carbon atoms), or a monomer in which more than one $R^{a12}$'s are combined (e.g., a mixture of a compound with $R^{a12}$ having 17 carbon atoms and a compound with $R^{a12}$ having 15 carbon atoms).

Examples of amide group-containing monomers include carboxylic acid amide alkyl (meth)acrylate.

Specific examples of amide group-containing monomers include palmitic acid amide ethyl (meth)acrylate, stearic acid amide ethyl (meth)acrylate, behenic acid amide ethyl (meth)acrylate, myristic acid amide ethyl (meth)acrylate, lauric acid amide ethyl (meth)acrylate, isostearic acid ethylamide (meth)acrylate, oleic acid ethylamide (meth)acrylate, t-butyl cyclohexylcaproic acid amide ethyl (meth)acrylate, adamantanecarboxylic acid ethylamide (meth)acrylate, naphthalenecarboxylic acid amide ethyl (meth)acrylate, anthracenecarboxylic acid amide ethyl (meth)acrylate, palmitic acid amide propyl (meth)acrylate, stearic acid amide propyl (meth)acrylate, palmitic acid amide ethyl vinyl ether, stearic acid amide ethyl vinyl ether, palmitic acid amide ethyl allyl ether, stearic acid amide ethyl allyl ether and a mixture thereof.

It is preferable that the amide group-containing monomer is stearic acid amide ethyl (meth)acrylate. The amide group-containing monomer may be a mixture containing stearic acid amide ethyl (meth)acrylate. The amount of stearic acid amide ethyl (meth)acrylate in the mixture containing stearic acid amide ethyl (meth)acrylate may be, for example, 40% by weight or more, 50% by weight or more, 60% by weight or more, or 70% by weight or more, and 90% by weight or less, 80% by weight or less, or 70% by weight or less relative to the total weight of the amide group-containing monomers. The rest of the monomers may be, for example, palmitic acid amide ethyl (meth)acrylate.

(a2) Monomer

The monomer (a2) is a compound represented by the formula:

$CH_2$=C(-$X^{a2}$)-C(=O)-$Y^{a2}$-$R^{a2}$

wherein $R^{a2}$ is a hydrocarbon group having 6 or more and 40 or less carbon atoms;
$X^{a2}$ is a hydrogen atom, a monovalent organic group or a halogen atom; and
$Y^{a2}$ is -O- or -NH-.

The monomer (a2) is a long chain acrylate ester monomer wherein $Y^{a2}$ is -O-, or a long chain acrylamide monomer wherein $Y^{a2}$ is -NH-.

$R^{a2}$ is preferably an aliphatic hydrocarbon group, particularly preferably a saturated aliphatic hydrocarbon group and especially preferably an alkyl group. In $R^{a2}$, the hydrocarbon group has preferably 12 to 30, for example, 16 to 26, in particular 18 to 22 carbon atoms.

$X^{a2}$ may be a hydrogen atom, a methyl group, a halogen excluding a fluorine atom, a substituted or non-substituted benzyl group, or a substituted or non-substituted phenyl group. $X^{a2}$ is preferably a hydrogen atom, a methyl

group or a chlorine atom.

Preferred examples of long chain acrylate ester monomers include lauryl (meth)acrylate, stearyl (meth)acrylate, icosyl (meth)acrylate, behenyl (meth)acrylate, stearyl $\alpha$-chloroacrylate, icosyl $\alpha$-chloroacrylate and behenyl $\alpha$-chloroacrylate.

Examples of long chain acrylamide monomers include stearyl (meth)acrylamide, icosyl (meth)acrylamide and behenyl (meth)acrylamide.

(b) Hydrophilic group-containing monomer

The hydrocarbon group-containing polymer may have a repeating unit derived from a hydrophilic group-containing monomer (b). The monomer (b) is a monomer other than the monomer (a), and is a monomer having a hydrophilic group.

The monomer (b) preferably has a (meth)acrylic group as the group having an ethylenically unsaturated double bond, and for example, may have a (meth)acrylate group or a (meth)acrylamide group as the ethylenically unsaturated double bond. The monomer (a) may have one or two groups having an ethylenically unsaturated double bond, but preferably has only one.

The hydrophilic group is preferably an oxyalkylene-containing group (in which the alkylene group has 2 to 6 carbon atoms), and particularly preferably an oxyethylene group. The monomer (b) is preferably oxyalkylene (meth) acrylate, for example, polyalkylene (or monoalkylene) glycol mono(meth)acrylate and/or polyalkylene (or monoalkylene) glycol di(meth)acrylate, polyalkylene (or monoalkylene) glycol mono(meth)acrylamide.

The monomer (b) is preferably oxyalkylene (meth)acrylate represented by the formula:

$$CH_2=CX^bC(=O)-Y^b-(R^bO)_n-A^b$$

[wherein

$X^b$ is a hydrogen atom or a methyl group,
$Y^b$ is -O- or -NH-,
$R^b$ is each independently an alkylene group having 2 to 6 carbon atoms,
$A^b$ is a hydrogen atom, an unsaturated or saturated hydrocarbon group having 1 to 22 carbon atoms or $CH_2=CX^bC(=O)-$, and
n is an integer of 1 to 90].

Examples of monomer (b) are preferably those represented by the formula:

$$CH_2=CX^bC(=O)-O-(R^bO)_n-A^{bi} \quad (b1)$$

$$CH_2=CX^bC(=O)-O-(R^bO)_n-C(=O)CX^b=CH_2 \quad (b2),$$

or

$$CH_2=CX^bC(=O)-NH-(R^bO)_n-A^{bi} \quad (b3),$$

[wherein

$X^b$ is each independently a hydrogen atom or a methyl group,
$A^{bi}$ is each independently a hydrogen atom or an unsaturated or saturated hydrocarbon group having 1 to 22 carbon atoms,
$R^b$ is each independently an alkylene group having 2 to 6 carbon atoms, and
n is an integer of 1 to 90].

n is, for example, 1 to 50, in particular 1 to 30, especially 1 to 15 or 2 to 15. Or, n may be, for example, 1.

$R^b$ may be a linear or branched alkylene group, and may be, for example, a group represented by the formula $-(CH_2)_x-$ or $-(CH_2)_{x1}-(CH(CH_3))_{x2}-$ wherein x1 and x2 are 0 to 6, for example, 2 to 5, and the sum of x1 and x2 is 1 to 6, and the order of $-(CH_2)_{x1}-$ and $-(CH(CH_3))_{x2}-$ is not limited to the order in the formula described, and may be random.

In $-(R^bO)_n-$, there may be 2 or more types of Rs (e.g., 2 to 4 types, in particular, 2 types). $-(R^bO)_n-$ may be, for example, a combination of $-(R^1O)_{n1}-$ and $-(R^2O)_{n2}-$ wherein $R^1$ and $R^2$ are different from each other and are an alkylene group having 2 to 6 carbon atoms, n1 and n2 are a number of 1 or more, and the sum of n1 and n2 is 2 to 90.

In the formula (b1), (b2) and (b3), $R^b$ is preferably an ethylene group, a propylene group or a butylene group, and particularly preferably a butylene group. In the formula (b1), (b2) and (b3), $R^b$ may be a combination of two or more alkylene groups. In that case, at least one R is preferably an ethylene group, propylene group or a butylene group. Examples of combinations of $R^b$ include a combination of an ethylene group/ a propylene group, a combination of an ethylene group/ a butylene group and a combination of a propylene group/ a butylene group. The monomer (b) may be a mixture of two or more. In that case, at least one of the monomer (b) is preferably a monomer in which $R^b$ in the formula (b1), (b2) and (b3) is an ethylene group, a propylene group or a butylene group. When polyalkylene glycol di(meth)acrylate represented by the formula (b2) is used, using only polyalkylene glycol di(meth)acrylate as the monomer (b) is not preferred, and using it together with the monomer (b1) is preferred. Even in that case, it is preferable to keep the proportion of the compound represented by the formula (b2) at less than 30% in the monomers (b) used.

Specific examples of monomers (b) include, but are not limited to, the following monomers:

$CH_2$=CHCOO-$CH_2CH_2$O-H
$CH_2$=CHCOO-$CH_2CH_2CH_2$O-H
$CH_2$=CHCOO-$CH_2CH(CH_3)$O-H
$CH_2$=CHCOO-$CH(CH_3)CH_2$O-H
$CH_2$=CHCOO-$CH_2CH_2CH_2CH_2$O-H
$CH_2$=CHCOO-$CH_2CH_2CH(CH_3)$O-H
$CH_2$=CHCOO-$CH_2CH(CH_3)CH_2$O-H
$CH_2$=CHCOO-$CH(CH_3)CH_2CH_2$O-H
$CH_2$=CHCOO-$CH_2CH(CH_2CH_3)$O-H
$CH_2$=CHCOO-$CH_2C(CH_3)_2$O-H
$CH_2$=CHCOO-$CH(CH_2CH_3)CH_2$O-H
$CH_2$=CHCOO-$C(CH_3)_2CH_2$O-H
$CH_2$=CHCOO-$CH(CH_3)CH(CH_3)$O-H
$CH_2$=CHCOO-$C(CH_3)(CH_2CH_3)$O-H
$CH_2$=CHCOO-$(CH_2CH_2O)_2$-H
$CH_2$=CHCOO-$(CH_2CH_2O)_4$-H
$CH_2$=CHCOO-$(CH_2CH_2O)_5$-H
$CH_2$=CHCOO-$(CH_2CH_2O)_6$-H
$CH_2$=CHCOO-$(CH_2CH_2O)_5$-$CH_3$
$CH_2$=CHCOO-$(CH_2CH_2O)_9$-$CH_3$
$CH_2$=CHCOO-$(CH_2CH_2O)_{23}$-$CH_3$
$CH_2$=CHCOO-$(CH_2CH_2O)_{90}$-$CH_3$
$CH_2$=CHCOO-$(CH_2CH(CH_3)O)_9$-H
$CH_2$=CHCOO-$(CH_2CH(CH_3)O)_9$-$CH_3$
$CH_2$=CHCOO-$(CH_2CH(CH_3)O)_{12}$-$CH_3$
$CH_2$=CHCOO-$(CH_2CH_2O)_5$-$(CH_2CH(CH_3)O)_2$-H
$CH_2$=CHCOO-$(CH_2CH_2O)_5$-$(CH_2CH(CH_3)O)_3$-$CH_3$
$CH_2$=CHCOO-$(CH_2CH_2O)_8$-$(CH_2CH(CH_3)O)_6$-$CH_2CH(C_2H_5)C_4H_9$
$CH_2$=CHCOO-$(CH_2CH_2O)_{23}$-OOC$(CH_3)$C=$CH_2$
$CH_2$=CHCOO-$(CH_2CH_2O)_{20}$-$(CH_2CH(CH_3)O)_5$-$CH_2$-CH=$CH_2$
$CH_2$=CHCOO-$(CH_2CH_2O)_9$-H
$CH_2$=$C(CH_3)$COO-$CH_2CH_2$O-H
$CH_2$=$C(CH_3)$COO-$CH_2CH_2CH_2$O-H
$CH_2$=$C(CH_3)$COO-$CH_2CH(CH_3)$O-H
$CH_2$=$C(CH_3)$COO-$CH(CH_3)CH_2$O-H
$CH_2$=$C(CH_3)$COO-$CH_2CH_2CH_2CH_2$O-H
$CH_2$=$C(CH_3)$COO-$CH_2CH_2CH(CH_3)$O-H
$CH_2$=$C(CH_3)$COO-$CH_2CH(CH_3)CH_2$O-H
$CH_2$=$C(CH_3)$COO-$CH(CH_3)CH_2CH_2$O-H
$CH_2$=$C(CH_3)$COO-$CH_2CH(CH_2CH_3)$O-H
$CH_2$=$C(CH_3)$COO-$CH_2C(CH_3)_2$O-H
$CH_2$=$C(CH_3)$COO-$CH(CH_2CH_3)CH_2$O-H
$CH_2$=$C(CH_3)$COO-$C(CH_3)_2CH_2$O-H
$CH_2$=$C(CH_3)$COO-$CH(CH_3)CH(CH_3)$O-H
$CH_2$=$C(CH_3)$COO-$C(CH_3)(CH_2CH_3)$O-H
$CH_2$=$C(CH_3)$COO-$(CH_2CH_2O)_2$-H

$CH_2=C(CH_3)COO-(CH_2CH_2O)_4-H$
$CH_2=C(CH_3)COO-(CH_2CH_2O)_5-H$
$CH_2=C(CH_3)COO-(CH_2CH_2O)_6-H$
$CH_2=C(CH_3)COO-(CH_2CH_2O)_9-H$
$CH_2=C(CH_3)COO-(CH_2CH_2O)_5-CH_3$
$CH_2=C(CH_3)COO-(CH_2CH_2O)_9-CH_3$
$CH_2=C(CH_3)COO-(CH_2CH_2O)_{23}-CH_3$
$CH_2=C(CH_3)COO-(CH_2CH_2O)_{90}-CH_3$
$CH_2=C(CH_3)COO-(CH_2CH(CH_3)O)_9-H$
$CH_2=C(CH_3)COO-(CH_2CH(CH_3)O)_9-CH_3$
$CH_2=C(CH_3)COO-(CH_2CH(CH_3)O)_{12}-CH_3$
$CH_2=C(CH_3)COO-(CH_2CH_2O)_5-(CH_2CH(CH_3)O)_2-H$
$CH_2=C(CH_3)COO-(CH_2CH_2O)_5-(CH_2CH(CH_3)O)_3-CH_3$
$CH_2=C(CH_3)COO-(CH_2CH_2O)_8-(CH_2CH(CH_3)O)_6-CH_2CH(C_2H_5)C_4H_9$
$CH_2=C(CH_3)COO-(CH_2CH_2O)_{23}-OOC(CH_3)C=CH_2$
$CH_2=C(CH_3)COO-(CH_2CH_2O)_{20}-(CH_2CH(CH_3)O)_5-CH_2-CH=CH_2$
$CH_2=CH-C(=O)-NH-CH_2CH_2O-H$
$CH_2=CH-C(=O)-NH-CH_2CH_2CH_2O-H$
$CH_2=CH-C(=O)-NH-CH_2CH(CH_3)O-H$
$CH_2=CH-C(=O)-NH-CH(CH_3)CH_2O-H$
$CH_2=CH-C(=O)-NH-CH_2CH_2CH_2CH_2O-H$
$CH_2=CH-C(=O)-NH-CH_2CH_2CH(CH_3)O-H$
$CH_2=CH-C(=O)-NH-CH_2CH(CH_3)CH_2O-H$
$CH_2=CH-C(=O) -NH-CH(CH_3)CH_2CH_2O-H$
$CH_2=CH-C(=O)-NH-CH_2CH(CH_2CH_3)O-H$
$CH_2=CH-C(=O)-NH-CH_2C(CH_3)_2O-H$
$CH_2=CH-C(=O)-NH-CH(CH_2CH_3)CH_2O-H$
$CH_2=CH-C(=O)-NH-C(CH_3)_2CH_2O-H$
$CH_2=CH-C(=O)-NH-CH (CH_3)CH(CH_3)O-H$
$CH_2=CH-C(=O)-NH-C(CH_3)(CH_2CH_3)O-H$
$CH_2=CH-C(=O) -NH-(CH_2CH_2O)_2-H$
$CH_2=CH-C(=O)-NH-(CH_2CH_2O)_4-H$
$CH_2=CH-C(=O)-NH-(CH_2CH_2O)_5-H$
$CH_2=CH-C(=O) -NH-(CH_2CH_2O)_6-H$
$CH_2=CH-C(=O)-NH-(CH_2CH_2O)_9-H$
$CH_2=CH-C(=O)-NH-(CH_2CH_2O)_5-CH_3$
$CH_2=CH-C(=O)-NH-(CH_2CH_2O)_9-CH_3$
$CH_2=CH-C(=O)-NH-(CH_2CH_2O)_{23}-CH_3$
$CH_2=CH-C(=O)-NH-(CH_2CH_2O)_{90}-CH_3$
$CH_2=CH-C(=O)-NH-(CH_2CH(CH_3)O)_9-H$
$CH_2=CH-C(=O)-NH-(CH_2CH(CH_3)O)_9-CH_3$
$CH_2=CH-C(=O)-NH-(CH_2CH(CH_3)O)_{12}-CH_3$
$CH_2=CH-C(=O) -NH-(CH_2CH_2O)_5-(CH_2CH(CH_3)O)_2-H$
$CH_2=CH-C(=O)-NH-(CH_2CH_2O)_5-(CH_2CH(CH_3)O)_3-CH_3$
$CH_2=CH-C(=O)-NH-(CH_2CH_2O)_8-(CH_2CH(CH_3)O)_6-CH_2CH(C_2H_5)C_4H_9$
$CH_2=C(CH_3)-C(=O)-NH-CH_2CH_2O-H$
$CH_2=C(CH_3)-C(=O)-NH-CH_2CH_2CH_2O-H$
$CH_2=C(CH_3)-C(=O)-NH-CH_2CH(CH_3)O-H$
$CH_2=C(CH_3)-C(=O)-NH-CH(CH_3)CH_2O-H$
$CH_2=C(CH_3)-C(=O)-NH-CH_2CH_2CH_2CH_2O-H$
$CH_2=C(CH_3)-C(=O)-NH-CH_2CH_2CH(CH_3)O-H$
$CH_2=C(CH_3)-C(=O)-NH-CH_2CH(CH_3)CH_2O-H$
$CH_2=C(CH_3)-C(=O)-NH-CH(CH_3)CH_2CH_2O-H$
$CH_2=C(CH_3)-C(=O)-NH-CH_2CH(CH_2CH_3)O-H$
$CH_2=C(CH_3)-C(=O)-NH-CH_2C(CH_3)_2O-H$
$CH_2=C(CH_3)-C(=O)-NH-CH(CH_2CH_3)CH_2O-H$
$CH_2=C(CH_3)-C(=O)-NH-C(CH_3)_2CH_2O-H$
$CH_2=C(CH_3)-C(=O)-NH-CH(CH_3)CH(CH_3)O-H$

$CH_2=C(CH_3)-C(=O)-NH-C(CH_3)(CH_2CH_3)O-H$
$CH_2=C(CH_3)-C (=O)-NH-(CH_2CH_2O)_2-H$
$CH_2=C(CH_3)-C(=O)-NH-(CH_2CH_2O)_4-H$
$CH_2=C(CH_3)-C(=O)-NH-(CH_2CH_2O)_5-H$
$CH_2=C(CH_3)-C(=O)-NH-(CH_2CH_2O)_6-H$
$CH_2=C(CH_3)-C(=O)-NH-(CH_2CH_2O)_9-H$
$CH_2=C(CH_3)-C(=O)-NH-(CH_2CH_2O)_5-CH_3$
$CH_2=C(CH_3)-C(=O)-NH-(CH_2CH_2O)_9-CH_3$
$CH_2=C(CH_3)-C (=O)-NH-(CH_2CH_2O)_{23}-CH_3$
$CH_2=C(CH_3)-C(=O)-NH-(CH_2CH_2O)_{90}-CH_3$
$CH_2=C(CH_3)-C(=O)-NH-(CH_2CH(CH_3)O)_9-H$
$CH_2=C(CH_3)-C(=O)-NH-(CH_2CH(CH_3)O)_9-CH_3$
$CH_2=C(CH_3)-C(=O)-NH-(CH_2CH(CH_3)O)_{12}-CH_3$
$CH_2=C(CH_3)-C(=O)-NH-(CH_2CH_2O)_5-(CH_2CH(CH_3)O)_2-H$
$CH_2=C(CH_3)-C(=O)-NH-(CH_2CH_2O)_5-(CH_2CH(CH_3)O)_3-CH_3$
$CH_2=C(CH_3)-C(=O)-NH-(CH_2CH_2O)_8-(CH_2CH(CH_3)O)_6-CH_2CH(C_2H_5)C_4H_9$

Acrylate and acrylamide in which $X^2$ is a hydrogen atom are preferred as the monomer (b). The monomer (b) is particularly preferably hydroxyethyl acrylate, hydroxypropyl acrylate, hydroxybutyl acrylate or hydroxyethyl acrylamide.

(c) Ionic group-containing monomer

The hydrocarbon group-containing polymer may have a repeating unit derived from an ionic group-containing monomer (c). The monomer (c) is preferably a monomer having an ethylenically unsaturated double bond and an ionic group (in particular, an acrylic monomer). The ionic group is an anionic group and/or a cationic group, or a salt thereof.

The monomer (c) preferably has a (meth)acrylic group as the ethylenically unsaturated double bond, and for example, may have a (meth)acrylate group or a (meth)acrylamide group as the ethylenically unsaturated double bond.

Examples of monomers having an anionic group include a monomer having a carboxyl group, a sulfonic acid group or a phosphate group. Specific examples of monomers having an anionic group include (meth)acrylic acid, crotonic acid, maleic acid, fumaric acid, itaconic acid, citraconic acid, vinylsulfonic acid, (meth)allylsulfonic acid, styrene sulfonic acid, phosphoric acid (meth)acrylate, vinylbenzene sulfonic acid, acrylamide t-butylsulfonic acid and a salt thereof.

Examples of salts of the anionic group include alkaline metal salt, alkaline earth metal salt, and an ammonium salt such as methyl ammonium salt, ethanol ammonium salt and triethanol ammonium salt.

In the monomer having a cationic group, examples of cationic groups include an amino group, which is preferably a tertiary amino group and a quaternary amino group. It is preferable that in the tertiary amino group, two groups bonded to a nitrogen atom, which are the same or different, are an aliphatic group having 1 to 5 carbon atoms (in particular alkyl group), an aromatic group having 6 to 20 carbon atoms (an aryl group), or an aromatic aliphatic group having 7 to 25 carbon atoms (in particular an aralkyl group, e.g., a benzyl group ($C_6H_5-CH_2-$)). It is preferable that in the quaternary amino group, three groups bonded to a nitrogen atom, which are the same or different, are an aliphatic group having 1 to 5 carbon atoms (in particular alkyl group), an aromatic group having 6 to 20 carbon atoms (an aryl group), or an aromatic aliphatic group having 7 or more and 25 or less carbon atoms (in particular an aralkyl group, e.g., benzyl group ($C_6H_5-CH_2-$)). In the tertiary amino group and the quaternary amino group, the last group bonded to the nitrogen atom may have an ethylenically unsaturated double bond. The cationic group may be in the form of salt.

The cationic group in the form of salt is a salt with an acid (an organic acid or an inorganic acid). An organic acid such as a carboxylic acid having 1 to 20 carbon atoms (in particular, a monocarboxylic acid such as acetic acid, propionic acid, butyric acid and stearic acid) are preferred. Dimethylaminoethyl (meth)acrylate, diethylaminoethyl (meth)acrylate and a salt thereof are preferred.

Specific examples of monomers having a cationic group are as follows:

$CH_2=CHCOO-CH_2CH_2-N(CH_3)_2$ and a salt thereof (e.g., acetate)
$CH_2=CHCOO-CH_2CH_2-N(CH_2CH_3)_2$ and a salt thereof (e.g., acetate)
$CH_2=C(CH_3)COO-CH_2CH_2-N(CH_3)_2$ and a salt thereof (e.g., acetate)
$CH_2=C(CH_3)COO-CH_2CH_2-N(CH_2CH_3)_2$ and a salt thereof (e.g., acetate)
$CH_2=CHC(O)N(H)-CH_2CH_2CH_2-N(CH_3)_2$ and a salt thereof (e.g., acetate)
$CH_2=CHCOO-CH_2CH_2-N(-CH_3) (-CH_2-C_6H_5)$ and a salt thereof (e.g., acetate)
$CH_2=C(CH_3)COO-CH_2CH_2-N(-CH_2CH_3)(-CH_2-C_6H_5)$ and a salt thereof (e.g., acetate)
$CH_2=CHCOO-CH_2CH_2-N^+(CH_3)_3Cl^-$
$CH_2=CHCOO-CH_2CH_2-N^+(-CH_3)_2(-CH_2-C_6H_5)Cl^-$

$CH_2=C(CH_3)COO-CH_2CH_2-N^+(CH_3)_3Cl^-$
$CH_2=CHCOO-CH_2CH(OH)CH_2-N^+(CH_3)_3Cl^-$
$CH_2=C(CH_3)COO-CH_2CH(OH)CH_2-N^+(CH_3)_3Cl^-$
$CH_2=C(CH_3)COO-CH_2CH(OH)CH_2-N^+(-CH_2CH_3)_2(-CH_2-C_6H_5)Cl^-$
$CH_2=C(CH_3)COO-CH_2CH_2-N^+(CH_3)_3Br^-$
$CH_2=C(CH_3)COO-CH_2CH_2-N^+(CH_3)_3I^-$
$CH_2=C(CH_3)COO-CH_2CH_2-N^+(CH_3)_3O^-SO_3CH_3$
$CH_2=C(CH_3)COO-CH_2CH_2-N^+(CH_3)(-CH_2-C_6H_5)_2Br^-$

Methacrylic acid, acrylic acid and dimethylaminoethyl methacrylate are preferred, and methacrylic acid and dimethylaminoethyl methacrylate are more preferred as the ionic group-containing monomer (c).

(d) Halogenated olefin monomer

The hydrocarbon group-containing polymer may comprise a repeating unit derived from a halogenated olefin monomer (d). The halogenated olefin monomer (d) may not have a fluorine atom. The halogenated olefin monomer (d) is preferably an olefin having 2 to 20 carbon atoms and substituted by 1 to 10 chlorine atoms, bromine atoms or iodine atoms. The halogenated olefin monomer (d) is preferably chlorinated olefin having 2 to 20 carbon atoms, and particularly preferably chlorinated olefin having 2 to 5 carbon atoms and 1 to 5 chlorine atoms. Preferred examples of halogenated olefin monomers (d) include halogenated vinyl such as vinyl chloride, vinyl bromide, vinyl iodide and halogenated vinylidene such as vinylidene chloride, vinylidene bromide and vinylidene iodide. Vinyl chloride and vinylidene chloride are preferred because they increase water-repellency, in particular, durability of water-repellency. The presence of the repeating unit derived from a halogenated olefin monomer (d) improves wash durability provided by the hydrocarbon group-containing polymer.

(e) Crosslinkable monomer

The hydrocarbon group-containing polymer may have a repeating unit derived from a crosslinkable monomer (e). The cross-linkable monomer (e) has a reactive group and/or an ethylenically unsaturated double bond (preferably a (meth) acrylate group). The cross-linkable monomer (e) may be a monomer containing no fluorine atoms. The cross-linkable monomer (e) may be a compound having at least two ethylenically unsaturated double bonds (preferably a (meth)acrylate group), or a compound having at least one ethylenically unsaturated double bond and at least one reactive group. Examples of reactive groups include a hydroxyl group, an epoxy group, chloromethyl group, a blocked isocyanate group, an amino group and a carboxyl group.

Examples of the crosslinkable monomer may include a vinyl monomer having a reactive group, and a mono(meth)acrylate, di(meth)acrylate or di(meth)acrylamide having a reactive group.

Examples of crosslinkable monomers include, but are not limited to, diacetone (meth)acrylamide, 3-chloro-2-hydroxypropyl(meth)acrylate, 2-acetoacetoxyethyl (meth)acrylate, butadiene, isoprene, chloroprene, vinyl monochloroacetate, vinyl methacrylate, glycidyl (meth)acrylate, 1,4-butanediol di(meth)acrylate, 1,6-hexanediol di(meth)acrylate, 1,9-nonanediol di(meth)acrylate and neopentylglycol di(meth)acrylate.

(f) Cyclic hydrocarbon group-containing monomer

The hydrocarbon group-containing polymer may have a repeating unit derived from a cyclic hydrocarbon group-containing monomer (f). The cyclic hydrocarbon group-containing monomer (f) is a monomer having a cyclic hydrocarbon group, and may be a monomer having an ethylenically unsaturated double bond and a cyclic hydrocarbon group. The hydrocarbon group-containing polymer may be a styrene polymer having a repeating unit derived from styrene or a styrene derivative.

The cyclic hydrocarbon group-containing monomer (f) preferably has a (meth)acrylic group as the ethylenically unsaturated double bond, and for example, may have a (meth)acrylate group or a (meth)acrylamide group as the ethylenically unsaturated double bond.

The cyclic hydrocarbon group may be alicyclic or aromatic. The cyclic hydrocarbon group may be saturated or unsaturated. The cyclic hydrocarbon group may be a monocyclic group, a polycyclic group, or a bridged-ring group, and is preferably a bridged-ring group. The cyclic hydrocarbon group may have a chain group (for example, a halogen atom, a linear or branched hydrocarbon group (in particular, a linear or branched hydrocarbon group having 1 to 20 carbon atoms).

The cyclic hydrocarbon group may have 4 or more, 6 or more, or 8 or more, and 30 or less, 26 or less, 22 or less, 18 or less, or 14 or less carbon atoms.

Specific examples of cyclic hydrocarbon groups include a cyclohexyl group, a t-butylcyclohexyl group, an

adamantyl group, a 2-methyl-2-adamantyl group, a 2-ethyl-2-adamantyl group, a bornyl group, an isobornyl group, a norbornyl group, a dicyclopentanyl group, a dicyclopentenyl group, a benzyl group, a phenyl group, a naphthyl group, a 2-t-butylphenyl group, a residue formed by eliminating one or more hydrogen atoms from those groups (e.g., a cyclohexylene group, an adamantylene group, a phenylene group and a naphthylene group), and a substituted group thereof.

Specific examples of cyclic hydrocarbon group-containing monomers (f) include cyclohexyl(meth)acrylate, t-butylcyclohexyl(meth)acrylate, benzyl (meth)acrylate, isobornyl (meth)acrylate, dicyclopentanyl(meth)acrylate, dicyclopentenyl (meth)acrylate, dicyclopentanyloxyethyl (meth)acrylate, tricyclopentanyl (meth)acrylate, adamantyl (meth) acrylate, 2-methyl-2-adamantyl (meth)acrylate, 2-ethyl-2-adamantyl (meth)acrylate and a compound in which such acrylate is substituted with acrylamide. These may be used alone, or two or more of them may be used in combination.

An example of the cyclic hydrocarbon group-containing monomer (f) is a styrene compound. The styrene compound may be modified by a chain group (for example, a halogen atom, a linear or branched hydrocarbon group (in particular, a linear or branched hydrocarbon group having 1 to 20 carbon atoms). Specific examples thereof include styrene, 4-t-butylstyrene, 3,5-di-t-butylstyrene, 2,4,6-tri-t-butylstyrene, 4-methylstyrene, 3,5-dimethylstyrene, and 2,4,6-trimethylstyrene. The styrene compound may be an $\alpha$-methylstyrene compound or an $\alpha$-chlorostyrene compound having a chlorine atom at the $\alpha$ position, or may be a styrene compound having a hydrogen atom at the $\alpha$ position.

(g) Other monomers

Other monomers are not limited to those examples, and include acrylonitrile, short-chain alkyl (meth)acrylate, vinyl acetate, vinyl alkyl ether and polysiloxane group-containing monomers. Other monomers (g) may be used alone, or two or more of them may be used in combination.

[Composition of polymer]

It is preferable that the hydrocarbon group-containing polymer according to the present disclosure has as its main component the repeating unit derived from the hydrocarbon group-containing monomer (a1) and the amount of the hydrophilic group-containing monomer (b) or the ionic group-containing monomer (c) is small. The hydrophilic group-containing monomer (b) and the ionic group-containing monomer (c) are involved in dispersibility and adhesion to a substrate (a pulp substrate), and contribute to improvement in oil resistance. However, even when the amount of these monomers is reduced, by particularly increasing the constituent proportion of the hydrocarbon group-containing monomer as high as more than 90% in particular, an unexpected effect was found that oil resistance performance could be maintained even after stirring for a long time.

The combination of the monomers (a) to (g) constituting the repeating unit of the hydrocarbon group-containing polymer is not limited, and is for example, as follows (parentheses omitted).

a

a+b

a+b+c

a+c

a+d

a+b+c+d

a+b+c+d+e

a+b+c+d+e+f

Other monomers (h) may also be used together with the above combinations. When the hydrocarbon group-containing polymer is used for a pulp product, preferably the monomer (a), the monomer (b) and the monomer (c) are used together as the monomer.

In the above combinations, the monomer (a) may be the monomer (a1), but the monomer (a2) may also be used together.

The amount of the monomer (a) may be more than 90% by weight, 92% by weight or more, 94% by weight or more, 96% by weight or more, 98% by weight or more, 99% by weight or more, 99.5% by weight or more or 100% by weight,

and is preferably more than 97% by weight relative to the hydrocarbon group-containing polymer. Also, it is 100% by weight or less, 99% by weight or less, 97% by weight or less, 95% by weight or less or 93% by weight or less, and in an embodiment, it is more than 90% by weight and 100% by weight or less.

The amount of the monomer (a1) may be more than 90% by weight, 92% by weight or more, 94% by weight or more, 96% by weight or more, 98% by weight or more, 99% by weight or more, 99.5% by weight or more or 100% by weight, and for example, it is 93% by weight or more, and preferably more than 97% by weight relative to the hydrocarbon group-containing polymer. Also, it is 100% by weight or less, 99% by weight or less, 97% by weight or less, 95% by weight or less or 93% by weight or less, and in an embodiment, it is more than 90% by weight and 100% by weight or less. The amount of the monomer (a1) may be 100% by weight relative to the hydrocarbon group-containing polymer.

The amount of the monomer (a2) may be 0% by weight or more, 0.1% by weight or more, 1% by weight or more, 3% by weight or more, 5% by weight or more or 8% by weight or more, and it may also be 10% by weight or less, 8% by weight or less, 6% by weight or less, 4% by weight or less, 2% by weight or less, 1% by weight or less or 0% by weight among the monomer (a). In an embodiment, it is 0% by weight or more and less than 7% by weight, or 0% by weight or more and less than 3% by weight.

The amount of the repeating unit derived from the monomer (b) may be 0% by weight or more, 0.1% by weight or more, 1% by weight or more, 3% by weight or more, 5% by weight or more or 8% by weight or more, and it may also be 10% by weight or less, 8% by weight or less, 6% by weight or less, 4% by weight or less, 2% by weight or less, 1% by weight or less or 0% by weight relative to the hydrocarbon group-containing polymer. In an embodiment, it is 0% by weight or more and less than 7% by weight, or 0% by weight or more and less than 3% by weight.

The amount of the repeating unit derived from the monomer (c) may be 0% by weight or more, 0.1% by weight or more, 1% by weight or more, 3% by weight or more, 5% by weight or more or 8% by weight or more, and it may also be 10% by weight or less, 8% by weight or less, 6% by weight or less, 4% by weight or less, 2% by weight or less, 1% by weight or less or 0% by weight relative to the hydrocarbon group-containing polymer. In an embodiment, it is 0% by weight or more and less than 7% by weight, or 0% by weight or more and less than 3% by weight.

The amount of the repeating unit derived from the monomer (d) may be 0% by weight or more, 0.1% by weight or more, 1% by weight or more, 3% by weight or more, 5% by weight or more or 8% by weight or more, and it may also be 10% by weight or less, 8% by weight or less, 6% by weight or less, 4% by weight or less, 2% by weight or less, 1% by weight or less or 0% by weight relative to the hydrocarbon group-containing polymer. In an embodiment, it is 0% by weight or more and less than 7% by weight, or 0% by weight or more and less than 3% by weight.

The amount of the repeating unit derived from the monomer (e) may be 0% by weight or more, 0.1% by weight or more, 1% by weight or more, 3% by weight or more, 5% by weight or more or 8% by weight or more, and it may also be 10% by weight or less, 8% by weight or less, 6% by weight or less, 4% by weight or less, 2% by weight or less, 1% by weight or less or 0% by weight relative to the hydrocarbon group-containing polymer. In an embodiment, it is 0% by weight or more and less than 7% by weight, or 0% by weight or more and less than 3% by weight.

The amount of the repeating unit derived from the monomer (f) may be 0% by weight or more, 0.1% by weight or more, 1% by weight or more, 3% by weight or more, 5% by weight or more or 8% by weight or more, and it may also be 10% by weight or less, 8% by weight or less, 6% by weight or less, 4% by weight or less, 2% by weight or less, 1% by weight or less or 0% by weight relative to the hydrocarbon group-containing polymer. In an embodiment, it is 0% by weight or more and less than 7% by weight, or 0% by weight or more and less than 3% by weight.

The amount of the repeating unit derived from the monomer (g) may be 0% by weight or more, 0.1% by weight or more, 1% by weight or more, 3% by weight or more, 5% by weight or more or 8% by weight or more, and it may also be 10% by weight or less, 8% by weight or less, 6% by weight or less, 4% by weight or less, 2% by weight or less, 1% by weight or less or 0% by weight relative to the hydrocarbon group-containing polymer. In an embodiment, it is 0% by weight or more and less than 7% by weight, or 0% by weight or more and less than 3% by weight.

[Polymerization method]

The hydrocarbon group-containing polymer may be polymerized by a known polymerization method, and conditions of polymerization reaction may be optionally selected. Examples of polymerization methods include solution polymerization, suspension polymerization, emulsion polymerization, and condensation polymerization.

Solution polymerization uses a method in which monomer is dissolved in an organic solvent in the presence of a polymerization initiator, and after nitrogen replacement, the mixture is heated and stirred at 30 to 120°C for 1 to 10 hours. Examples of polymerization initiators include azobisisobutyronitrile, benzoyl peroxide, di-t-butyl peroxide, lauryl peroxide, cumene hydroperoxide, t-butyl peroxypivalate and diisopropyl peroxydicarbonate. 0.01 to 20 parts by weight, for example, 0.01 to 10 parts by weight of polymerization initiator is used relative to 100 parts by weight of the monomer.

Organic solvents are inert to monomers and dissolves them. Examples thereof include ester (e.g., ester having 2 to 40 carbon atoms such as ethyl acetate and butyl acetate), ketone (e.g., ketone having 2 to 40 carbon atoms such as methyl ethyl ketone, diisobutyl ketone and methyl isobutyl ketone), alcohol (e.g., alcohol having 1 to 40 carbon atoms such

as ethanol, butanol and isopropyl alcohol). Specific examples of solvents include acetone, chloroform, HCHC225, isopropyl alcohol, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichloroethylene, perchloroethylene, tetrachlorodifluoroethane and trichlorotrifluoroethane. 10 to 3,000 parts by weight, for example, 50 to 2,000 parts by weight of organic solvent is used relative to 100 parts by weight of the monomer.

Emulsion polymerization uses a method in which monomer is emulsified in water in the presence of a polymerization initiator and an emulsifier, and after nitrogen replacement, the monomer is polymerized by stirring at 50 to 80°C for 1 to 20 hours. As the polymerization initiator, a water-soluble initiator such as benzoyl peroxide, lauroyl peroxide, t-butyl perbenzoate, 1-hydroxycyclohexyl hydroperoxide, 3-carboxypropionyl peroxide, acetyl peroxide, azobisisobutylamidine-dihydrochloride, sodium peroxide, potassium persulfate and ammonium persulfate, and an oil-soluble initiator such as azobisisobutyronitrile, benzoyl peroxide, di-t-butylperoxide, lauryl peroxide, cumene hydroperoxide, t-butyl peroxypivalate and diisopropyl peroxydicarbonate. 0.01 to 10 parts by weight of polymerization initiator is used relative to 100 parts by weight of the total amount of the monomers.

To obtain a water dispersion of polymer having excellent standing stability, it is desirable to perform polymerization by forming fine particles of monomers in water by using an emulsification device which can offer high crush energy, such as a high pressure homogenizer and a ultrasonic homogenizer. The emulsifier may be anionic, cationic or nonionic, and 0.5 to 20 parts by weight of the emulsifier may be used relative to 100 parts by weight of the monomer. It is preferable to use an anionic and/or nonionic and/or cationic emulsifier. If monomers are not completely dissolved, it is preferable to add a compatibilizer which dissolves the monomers sufficiently, such as a water-soluble organic solvent or a low molecular weight monomer. Addition of the compatibilizer improves emulsifiability and copolymerizability.

The aqueous organic solvent may be the above organic solvent. Examples thereof include acetone, methyl ethyl ketone, ethyl acetate, propylene glycol, dipropylene glycol monomethyl ether, dipropylene glycol, tripropylene glycol and ethanol. 1 to 50 parts by weight, for example, 10 to 40 parts by weight of the organic solvent may be used relative to 100 parts by weight of water. Examples of low molecular weight monomers include methyl methacrylate, glycidyl methacrylate and 2,2,2-trifluoroethyl methacrylate. 1 to 50 parts by weight, for example, 10 to 40 parts by weight of the low molecular weight monomer may be used relative to 100 parts by weight of the total amount of the monomers.

A chain transfer agent may also be used in polymerization. The molecular weight of the polymer can be changed depending on the amount of use of the chain transfer agent. Examples of chain transfer agents include a mercaptan group-containing compound, in particular, alkyl mercaptan having 1 to 40 carbon atoms, such as lauryl mercaptan, thioglycol and thioglycerol, and an inorganic salt such as sodium hypophosphite and sodium hydrogen sulfide. 0.01 to 10 parts by weight, for example, 0.1 to 5 parts by weight of the chain transfer agent may be used relative to 100 parts by weight of the total amount of the monomers.

[Amount of polymer]

The amount of the hydrocarbon group-containing polymer may be 0.01% by weight or more, 0.03% by weight or more, 0.5% by weight or more, 1% by weight or more, 3% by weight or more, 5% by weight or more, 10% by weight or more, 20% by weight or more, or 30% by weight or more, and 60% by weight or less, 50% by weight or less, 40% by weight or less, 30% by weight or less, 20% by weight or less, 10% by weight or less, 5% by weight or less, or 3% by weight or less in the repellent agent. The hydrocarbon group-containing polymer itself may be used as a repellent agent.

{Lignin compound}

The repellent agent according to the present disclosure contains a lignin compound. By containing a lignin compound, the effect of the present disclosure can be attained well. For example, by containing a lignin compound, the stability of the repellent agent when made into a water dispersion can be improved.

In the present disclosure, the lignin compound is a compound selected from lignin and modified lignin. The modified lignin is a compound that has a structure derived from lignin as its main component, and a part of lignin is chemically modified and/or lowered in molecular weight. It may be a derivative of lignin, a decomposition product of lignin, a derivative of a decomposition product of lignin, or the like. Specific examples of the lignin compound include lignin, lignosulfonic acid, kraft lignin, soda lignin, soda-anthraquinone lignin, organosolv lignin, exploded lignin, and sulfuric acid lignin. Among these, lignosulfonic acid and kraft lignin are preferred.

The lignin compound has phenolic hydroxyl groups. The amount of phenolic hydroxyl groups may be 1.5% or more, preferably 1.6% or more, and more preferably 1.7% or more. Also, it may be 20% or less, 15% or less, 10% or less or 6.0% or less, and is preferably 5.5% or less, and more preferably 5.0% or less. In an embodiment, it is 1.5 to 6.0%, 1.6 to 5.5% or 1.7 to 5.0%. In addition, in the case where the lignin compound is kraft lignin, the amount of phenolic hydroxyl groups is further preferably 2.0% or more, and particularly preferably more than 2.5%.

Measurement of the amount of phenolic hydroxyl groups can be carried out by measuring the differential

absorption coefficient at around 300 nm using a spectrophotometer. To give an example, an ionization differential spectrum is obtained by subtracting, from the absorption spectrum of an alkaline solution containing a lignin sample (lignin compound), the absorption spectrum of a neutral solution containing the same concentration of lignin, and the amount of phenolic hydroxyl groups (%) is determined from the following expression:

Amount of phenolic hydroxyl groups (%) = $17 \times \Delta\alpha max/4,100 \times 100$.

$\Delta\alpha max$[L/(g·cm)] represents the differential absorption coefficient. For details, "Chemistry of Lignin - Fundamentals and Application - Expanded Ed." edited by Junzo Nakano, published by Uni Publishing Co., Ltd., May 25, 1990, p. 541) can be referred to.

The weight average molecular weight of the lignin compound may be 500 or more, 1,000 or more, 2,000 or more, 3,000 or more or 5,000 or more, and is preferably 1,000 or more. Also, it may be 500,000 or less, 300,000 or less, 100,000 or less, 50,000 or less or 30,000 or less, and is preferably 50,000 or less. The weight average molecular weight may be a molecular weight in terms of polyethylene glycol, as measured by GPC.

The lignin compound may have a functional group (in particular, an ionic group) other than the phenolic hydroxyl group, and examples of such a functional group include a hydroxyl group, a carboxyl group, a polyalkylene oxide chain, a sulfone group, a nitroxyl group, a carbonyl group, a phosphate group, an amino group, an epoxy group, a methylol group, a cyanate group, an isocyanate group, a vinyl group, and a maleimide group. In particular, it may be an ionic group, and preferably an anionic group. This can further improve dispersibility. Examples of such a functional group include a carboxyl group, a sulfone group and a phosphate group. Among these, a sulfone group is more preferred.

Since the lignin compound has a phenolic hydroxyl group, and furthermore, can also have an ionic group, it functions as an ionic dispersant (ionic surfactant), in particular, as an anionic dispersant (anionic surfactant), as well.

The lignin compound preferably has a sulfur-containing functional group such as a sulfo group or thiol. The content of sulfur may be 0.1% by mass or more, 0.3% by weight or more or 0.5% by weight or more, and it may also be 6% by weight or less, 5% by weight or less, 4% by weight or less or 3% by weight or less.

Functional groups in the lignin compound can be measured quantitatively or qualitatively by instrumental analysis such as NMR, IR and elemental analysis.

The lignin compound may contain constituent units derived from other compounds to the extent that the effect of the present disclosure is not impaired. Examples of the other compounds include (alkyl)phenols such as phenol and cresol; and aromatic hydrocarbon compounds such as benzene and naphthalene.

Note that it is difficult to uniformly specify the chemical structure of the lignin compound by a general formula or other methods. The reason for this is that the skeleton that constitutes the lignin compound has a very complicated molecular structure.

The lignin compound may be a salt. Examples of the salt include an alkali metal salt such as sodium salt or potassium salt; an alkaline earth metal salt such as calcium salt; an ammonium salt; and an organic amine salt.

[Lignosulfonic acid]

The lignin compound is preferably lignosulfonic acid. Lignosulfonic acid is a lignin compound modified with sulfo groups. For example, it may be a compound having a skeleton in which sulfo groups have been introduced by cleavage of the carbon at the side chain $\alpha$ position of the hydroxyphenylpropane structure of lignin.

Lignosulfonic acid may be a lignosulfonate salt. Examples of the salt include an alkali metal salt such as sodium salt or potassium salt; an alkaline earth metal salt such as calcium salt; an ammonium salt; and an organic amine salt, and for example, it may be sodium lignosulfonate.

Commercially available products may be used as lignosulfonic acid, and examples thereof include Vanillex HW (manufactured by Nippon Paper Industries Co., Ltd.), San X M (manufactured by Nippon Paper Industries Co., Ltd.), Pearllex NP (manufactured by Nippon Paper Industries Co., Ltd.), Sunflow RH (manufactured by Nippon Paper Industries Co., Ltd.), POLYFON and REAX (both manufactured by Ingevity Corp).

[Amount of lignin compound]

The amount of lignin compound may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, and 500 parts by weight or less, 300 parts by weight or less, 200 parts by weight or less, 100 parts by weight or less, 30 parts by weight or less, 20 parts by weight or less, 10 parts by weight or less, 5 parts by weight or less, 3 parts by weight or less, or 1 part by weight or less relative to 100 parts by weight of the hydrocarbon group-containing compound.

{Dispersant}

The repellent agent according to the present disclosure may contain a dispersant. The dispersant may be at least one selected from an organic dispersant and an inorganic dispersant. The dispersant may be at least one selected from an anionic dispersant, a nonionic dispersant, a cationic dispersant, an amphoteric dispersant and an inorganic dispersant. In particular, the repellent agent of the present disclosure may contain a nonionic dispersant.
An organic dispersant and an inorganic dispersant may be used as the dispersant, respectively, or an organic dispersant and an inorganic dispersant may be used in combination.
An organic dispersant may be used as the dispersant. The organic dispersant may be classified into a nonionic dispersant, an anionic dispersant, a cationic dispersant and an amphoteric dispersant. The organic dispersant may mean a surfactant.
The dispersant may not have a fluorine atom.

[Nonionic dispersant]

The dispersant may comprise a nonionic dispersant. The nonionic dispersant may be a nonionic surfactant.
The nonionic dispersant may be of low molecular weight (for example, with a molecular weight of 2,000 or less, in particular, 10,000 or less) or may be of high molecular weight (for example, with a molecular weight of 2,000 or more). The molecular weight of the nonionic dispersant may be 100 or more, 500 or more, 1,000 or more, 2,000 or more, 4,000 or more or 6,000 or more, and it may also be 1,000,000 or less, 750,000 or less, 500,000 or less, 250,000 or less, 100,000 or less, 50,000 or less, 10,000 or less, 7,500 or less, 5,000 or less, 25,000 or less, 750 or less or 250 or less.
Examples of nonionic dispersant include ether, ester, ester ether, alkanolamide, polyol and amine oxide.
The ether is, for example, a compound having an oxyalkylene group (preferably a polyoxyethylene group).
The ester is, for example, an ester of an alcohol and a fatty acid. The alcohol is, for example, an alcohol which is monohydric to 30-hydric (particularly dihydric to decahydric) and has 1 to 50 carbon atoms (particularly 10 to 30 carbon atoms) (for example, an aliphatic alcohol). Examples of the fatty acids are saturated or unsaturated fatty acids having 2 to 50 carbon atoms, particularly 5 to 30 carbon atoms.
The ester ether is, for example, a compound in which an alkylene oxide (particularly ethylene oxide) is added to an ester of an alcohol and a fatty acid. The alcohol is, for example, an alcohol which is monohydric to 30-ahydric (particularly dihydric to decahydric) and has 1 to 50 carbon atoms (particularly 3 to 30 carbon atoms) (for example, an aliphatic alcohol). Examples of the fatty acids are saturated or unsaturated fatty acids having 2 to 50 carbon atoms, particularly 5 to 30 carbon atoms.
The alkanolamide is formed of for example, a fatty acid and an alkanolamine. The alkanolamide may be a monoalkanolamide or a dialkanolamide. Examples of the fatty acids are saturated or unsaturated fatty acids having 2 to 50 carbon atoms, particularly 5 to 30 carbon atoms. The alkanolamine may be an alkanol with 1 to 3 amino groups and 1 to 5 hydroxyl groups, having 2 to 50, particularly 5 to 30 carbon atoms.
The polyol may be, for example, a dihydric to pentahydric alcohol having 10 to 30 carbon atoms.
The amine oxide may be an oxide (for example, having 5 to 50 carbon atoms) of an amine (secondary amine or preferably tertiary amine).
The nonionic dispersant is preferably a nonionic dispersant having an oxyalkylene group (preferably a polyoxyethylene group). The alkylene group in the oxyalkylene group preferably has 2 to 10 carbon atoms. The number of oxyalkylene groups in the molecule of the nonionic dispersant is generally preferably 2 to 100.
The nonionic dispersant is selected from the group consisting of an ether, an ester, an ester ether, an alkanolamide, a polyol, or an amine oxide, and is preferably a nonionic dispersant having an oxyalkylene group.
The nonionic dispersant may be, for example, an alkylene oxide adduct of a linear and/or branched aliphatic (saturated and/or unsaturated) group, a polyalkylene glycol ester of a linear and/or branched fatty acid (saturated and/or unsaturated), a sorbitan ester of a linear and/or branched fatty acid (saturated and/or unsaturated), a glycerin ester of a linear and/or branched fatty acid (saturated and/or unsaturated), a polyglycerol ester of a linear and/or branched fatty acid (saturated and/or unsaturated), a sucrose ester of a linear and/or branched fatty acid (saturated and/or unsaturated), a polyoxyethylene (POE)/polyoxypropylene (POP) copolymer (random copolymer or block copolymer), and an alkylene oxide adduct of acetylene glycol. Among them, the nonionic dispersant is preferably a dispersant such that the structures of the alkylene oxide addition moiety and polyalkylene glycol moiety are polyoxyethylene (POE) or polyoxypropylene (POP) or POE/POP copolymer (which may be a random or block copolymer, for example.).
Furthermore, the nonionic dispersant may not include an aromatic group.
The nonionic dispersant may be the compound represented by the formula:

$$R^1O\text{-}(CH_2CH_2O)_p\text{-}(R^2O)_q\text{-}R^3$$

[wherein $R^1$ is an alkyl group having 1 to 22 carbon atoms, an alkenyl group or an acyl group, having 2 to 22 carbon atoms, $R^2$ is each independently the same or different and is an alkylene group having 3 or more carbon atoms (for example, 3 to 10),
$R^3$ is a hydrogen atom, an alkyl group having 1 to 22 carbon atoms, or an alkenyl group having 2 to 22 carbon atoms,
p is a numeral of 2 or more,
q is 0 or a numeral of 1 or more.].

$R^1$ preferably has 8 to 20 carbon atoms, in particular, 10 to 18 carbon atoms. Preferred specific examples of $R^1$ include an octyl group, a nonyl group, a trimethylnonyl group, a lauryl group, a tridecyl group, an oleyl group and a stearyl group.
$R^2$ is, for example, a propylene group and a butylene group.
In the nonionic dispersant, for example, p may be a numeral of 3 or more (for example, 5 to 200) and q may be a numeral of 2 or more (for example, 5 to 200). Namely, $-(R^2O)_q$-may form, for example, a polyoxyalkylene chain.
The nonionic dispersant may be, for example, a polyoxyethylene alkylene alkyl ether comprising a hydrophilic polyoxyethylene chain and a hydrophobic oxyalkylene chain (particularly a polyoxyalkylene chain) in the center. The hydrophobic oxyalkylene chain includes, for example, an oxypropylene chain, an oxybutylene chain, and a styrene chain. The oxypropylene chain is preferred among them.
Specific examples of the nonionic dispersant include a condensation product of ethylene oxide with hexylphenol, isooctatylphenol, hexadecanol, oleic acid, an alkane($C_{12}$-$C_{16}$) thiol, a sorbitan monofatty acid ($C_7$-$C_{19}$), an alkyl ($C_{12}$-$C_{18}$) amine, or the like, and a sorbitan fatty acid ester, a glycerin fatty acid ester, a polyglycerin fatty acid ester, a sucrose fatty acid ester, a propylene glycol fatty acid ester, a polyoxyethylene alkyl ether, a polyoxyethylene polyoxypropylene alkyl ether, a polyoxyethylene glycerin fatty acid ester, a polyoxyethylene sorbitan fatty acid ester, and a lecithin derivative. An example of the nonionic dispersant is polyoxyethylene alkyl ether, polyoxyethylene polyoxypropylene alkyl ether, polyoxyethylene polyoxybutylene alkyl ether, polyoxyethylene polyoxypropylene glycol, polyethyleneimine ethoxylate, or the like.
The proportion of the polyoxyethylene block can be 5 to 80% by weight, for example, 30 to 75% by weight, particularly 40 to 70% by weight, based on a molecular weight of the nonionic dispersant (copolymer).
The average molecular weight of the nonionic dispersant is generally 300 to 5,000, for example, 500 to 3,000.
For example, the nonionic dispersant may be used singly or in admixture of two or more. The nonionic dispersant may be a mixture of a compound with an HLB (hydrophilic-hydrophobic balance) of less than 15 (particularly 5 or less) and a compound with an HLB of 15 or more. Specifically, the nonionic dispersant is preferably selected from polyoxyethylene alkyl ether, polyoxyethylene polyoxypropylene alkyl ether, polyoxyethylene and polyoxypropylene with a HLB value of 1 to 18, and sorbitan fatty acid ester, glycerol fatty acid ester, polyglycerol fatty acid ester, sucrose fatty acid ester, propylene glycol fatty acid ester, polyoxyethylene glycerol fatty acid ester and polyoxyethylene sorbitan fatty acid ester with a HLB value of less than 7.

[Cationic dispersant]

The dispersant may comprise a cationic dispersant. The cationic dispersant may be a cationic surfactant. The cationic dispersant may be a compound not having an amide group.
The cationic dispersant may be of low molecular weight (with a molecular weight of 2,000 or less, in particular, 10,000 or less) or of high molecular weight (with a molecular weight of, for example, 2,000 or more). The cationic dispersant may have a molecular weight of 100 or more, 500 or more, 1,000 or more, 2,000 or more, 4,000 or more, or 6,000 or more, and 1,000,000 or less, 750,000 or less, 500,000 or less, 250,000 or less, 100,000 or less, 50,000 or less, 10,000 or less, 7,500 or less, 5,000 or less, 25,000 or less, 750 or less, or 250 or less.
The cationic dispersant may be aliphatic or aromatic, and examples thereof include an ammonium salt (for example, a quaternary ammonium salt). The cationic dispersant may be oxyethylene-added ammonium salt. Specific examples of the cationic dispersant include an amine salt type dispersant such as an alkylamine salt, an amino alcohol fatty acid derivative, a polyamine fatty acid derivative and imidazoline; a quaternary ammonium salt type dispersant such as an alkyltrimethylammonium salt, a dialkyldimethylammonium salt, an alkyldimethylbenzylammonium salt, a pyridinium salt, an alkylisoquinolinium salt, benzalkonium chloride and benzethonium chloride; and a polymeric cationic dispersant such as polyquaternium-1 to 47. An example of the cationic dispersant is an alkylamine salt, a quaternary ammonium salt, or the like.
The cationic dispersant of low molecular weight may be a compound represented by the formula:

$$R^{21}\text{-}N^+(-R^{22})(-R^{23})(-R^{24})X^-$$

wherein $R^{21}$, $R^{22}$, $R^{23}$ and $R^{24}$ are hydrogen or a hydrocarbon group having 1 to 40 carbon atoms; and

X is an anionic group.

Specific examples of $R^{21}$, $R^{22}$, $R^{23}$ and -$R^{24}$ are an alkyl group (for example, a methyl group, a butyl group, a stearyl group and a palmityl group), an aromatic group (for example, a benzyl group and a phenyl group), and the like. Specific examples of X are a halogen (for example, chlorine) and an acid (for example, hydrochloric acid and acetic acid). An example of the cationic dispersant is a monoalkyltrimethylammonium salt (with an alkyl having 4 to 40 carbon atoms), benzalkonium chloride, or the like.

Specifically, the cationic dispersant of low molecular weight type may be an ammonium salt represented by the formula:

$$R^1{}_p\text{-}N^+R^2{}_qX^-$$

wherein $R^1$ is a C12 or more (for example, $C_{12}$ to $C_{50}$) linear and/or branched aliphatic (saturated and/or unsaturated) group;
$R^2$ is H or a C1 to C4 alkyl group, a benzyl group, or a polyoxyethylene group (the number of oxyethylene group is, for example, 1 (particularly 2, especially 3) to 50) ($CH_3$ and $C_2H_5$ are particularly preferred);
X is a halogen atom (for example, chlorine), or a $C_1$ to $C_4$ fatty acid salt, or a $C_1$ to $C_4$ sulfonate salt; and
p is 1 or 2, q is 2 or 3, and p + q = 4.

The number of carbon atoms of $R^1$ may be 12 to 50, for example, 12 to 30.

The low molecular weight cationic dispersants may include dodecyltrimethylammonium acetate, trimethyltetradecylammonium chloride, hexadecyltrimethylammonium bromide, trimethyloctadecylammonium chloride, (dodecylmethylbenzyl)trimethylammonium chloride, benzyldodecyldimethylammonium chloride, methyldodecyl di(hydropolyoxyethylene) ammonium chloride, benzyldodecyl di(hydropolyoxyethylene) ammonium chloride, N-[2-(diethylamino)ethyl] oleamide hydrochloride, and the like.

The cationic dispersant of high molecular weight type may be any of various polymers having cationic groups (for example, ammonium groups or quaternary ammonium groups) (for example, polyquaternium-1 to 47). Examples of the cationic dispersant of high molecular weight type include a cationic natural product (in particular, a cationic saccharide) such as cationic starch, cationic cellulose (for example, O-[2-hydroxy-3-(trimethylammonio)propyl] hydroxyethylcellulose chloride), cationic guar gum, cationic xanthan gum and chitosan; and a polymer of a cationic group-containing monomer such as aziridine, vinylimidazole, aminoalkyl methacrylate, N,N,N',N'-tetramethyl-2-butene-1,4-diamine, quaternized dimethylammonium ethyl methacrylate, diaryldimethylammonium chloride, dimethylaminopropylamine and quaternized vinylimidazole.

[Anionic dispersant]

The dispersant may comprise an anionic dispersant. The anionic dispersant may be an anionic surfactant. The dispersant may not include an anionic dispersant.

The anionic dispersant may be of low molecular weight (for example, with a molecular weight of 2,000 or less, in particular, 10,000 or less) or may be of high molecular weight (for example, with a molecular weight of 2,000 or more). The anionic dispersant may have a molecular weight of 100 or more, 500 or more, 1,000 or more, 2,000 or more, 4,000 or more, or 6,000 or more, and 1,000,000 or less, 750,000 or less, 500,000 or less, 250,000 or less, 100,000 or less, 50,000 or less, 25,000 or less, 10,000 or less, 7,500 or less, 5,000 or less, 2,500 or less, 750 or less, or 250 or less.

Examples of the anionic dispersant include an alkyl ether sulfate, an alkyl sulfate, an alkenyl ether sulfate, an alkenyl sulfate, an olefin sulfonate, an alkanesulfonate, a saturated or unsaturated fatty acid salt, an alkyl or alkenyl ether carbonate, an $\alpha$-sulfone fatty acid salt, a N-acylamino acid dispersant, a phosphate mono- or diester dispersant, and a sulfosuccinic acid ester. An example of the anionic dispersant is a carboxylate salt (for example, fatty acid salt) or the like.

[Amphoteric dispersant]

The dispersant may comprise an amphoteric dispersant. The amphoteric dispersant may be an amphoteric surfactant.

The amphoteric dispersant may be of low molecular weight (for example, with a molecular weight of 2,000 or less, in particular, 10,000 or less) or may be of high molecular weight (for example, with a molecular weight of 2,000 or more). The molecular weight of the amphoteric dispersant may be 100 or more, 500 or more, 1,000 or more, 2,000 or more, 4,000 or more or 6,000 or more, and it may also be 1,000,000 or less, 750,000 or less, 500,000 or less, 250,000 or less, 100,000 or less, 50,000 or less, 25,000 or less, 10,000 or less, 7,500 or less, 5,000 or less, 2,500 or less, 750 or less or 250 or less.

Examples of the amphoteric dispersants include, for example, alanines, imidazolinium betaines, amidobetaines,

and acetic acid betaine, and specific examples of the amphoteric dispersants include, for example, lauryl betaine, stearyl betaine, lauryl carboxymethyl hydroxyethyl imidazolinium betaine, lauryl dimethylamino acetic acid betaine, and fatty acid amidopropyldimethylaminoacetic acid betaine.

[Inorganic dispersant]

The dispersant may comprise an inorganic dispersant.

The inorganic dispersant has an average primary particle size of 5 nm or larger, 30 nm or larger, 100 nm or larger, 1 μm or larger, 10 μm or larger, or 25 μm or larger, and 100 μm or smaller, 50 μm or smaller, 10 μm or smaller, 1 μm or smaller, 500 nm or smaller, or 300 nm or smaller. The average primary particle size may be measured by a microscope, for example, a scanning electron microscope or a transmission electron microscope. The inorganic dispersant may be hydrophilic particles.

Examples of inorganic dispersants include polyvalent metal phosphate such as tricalcium phosphate, magnesium phosphate, aluminum phosphate, zinc phosphate and hydroxyapatite; carbonate such as calcium carbonate and magnesium carbonate; silicate such as calcium metasilicate; sulfate such as calcium sulfate and barium sulfate; and hydroxide such as calcium hydroxide, magnesium hydroxide and aluminum hydroxide.

[Amount of Dispersant]

The amount of dispersant may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the hydrocarbon group-containing polymer, and may be 500 parts by weight or less, 300 parts by weight or less, 200 parts by weight or less, 100 parts by weight or less, 30 parts by weight or less, 20 parts by weight or less, 10 parts by weight or less, 5 parts by weight or less, 3 parts by weight or less, or 1 part by weight or less.

{Liquid medium}

The repellent agent in the present disclosure may comprise a liquid medium. The liquid medium may be water, an organic solvent, or a mixture of water and an organic solvent. The repellent agent may be a dispersion or a solution. The repellent agent according to the present disclosure is suitably a water dispersion.

Examples of the organic solvents include esters (for example, esters having 2 to 40 carbon atoms, specifically ethyl acetate and butyl acetate), ketones (for example, ketones having 2 to 40 carbon atoms, specifically methyl ethyl ketone and diisobutyl ketone), alcohols (for example, alcohols having 1 to 40 carbon atoms, specifically isopropyl alcohol), aromatic solvents (for example, toluene and xylene), petroleum-based solvents (for example, alkanes having 5 to 10 carbon atoms, specifically, naphtha and kerosene). The organic solvent is preferably a water-soluble organic solvent. The water-soluble organic solvent may include a compound having at least one hydroxy group (for example, polyol such as alcohol and glycol solvent, and an ether form of polyol (for example, a monoether form)). These may be used alone, or two or more of them may be used in combination.

[Amount of liquid medium]

The amount of liquid medium may be 1 part by weight or more, 3 parts by weight or more, 5 parts by weight or more, 10 parts by weight or more, 20 parts by weight or more, 30 parts by weight or more, 40 parts by weight or more, or 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the hydrocarbon group-containing polymer.

The amount of water may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the hydrocarbon group-containing polymer.

The amount of the organic solvent may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the hydrocarbon group-containing polymer.

{Silicone}

The oil-resistant agent in the present disclosure may include silicone (polyorganosiloxane). Containing the silicone enables providing favorable texture and durability in addition to favorable liquid-repellency.

As the silicone, a known silicone can be used, and examples of the silicone include a polydimethylsiloxane and modified silicones (for example, amino-modified silicone, epoxy-modified silicone, carboxy-modified silicone, and methylhydrogen silicone). For example, the silicone may be silicone wax having waxy properties. These may be used singly or in combination of two or more thereof.

A weight-average molecular weight of the silicone may be 1,000 or more, 10,000 or more, or 50,000 or more, and may be 2,500,000 or less, 1,000,000 or less, 500,000 or less, 250,000 or less, 100,000 or less, or 50,000 or less.

[Amount of Silicone]

The amount of silicone is 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the hydrocarbon group-containing polymer, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less.

{Wax}

The oil-resistant agent in the present disclosure may include wax. Containing the wax can impart favorable liquid-repellency to a substrate.

Examples of wax include paraffin wax, microcrystalline wax, Fischer-Tropsch wax, polyolefin wax (for example, polyethylene wax and polypropylene wax), oxidized polyolefin wax, silicone wax, animal and vegetable wax and mineral wax. A hydrocarbon wax, in particular paraffin wax, is preferred. Specific examples of compounds constituting the wax include a n-alkane (such as tricosane, tetracosane, pentacosane, hexacosane, heptacosan, octacosan, nonacosan, triacontane, hentriacontane, dotriacontane, tritriacontane, tetratriacontane, pentatriacontane and hexatriacontane), and a n-alkene (such as eicosene, docosene, tricosene, tetracosene, pentacosene, hexacosene, heptacosene, octacosene, nonacosene, triacontane, hentriacontane, dotriacontane, tritriacontane, tetratriacontane, pentatriacontane and hexatriacontane (for example, a 1-alkene thereof)). The number of carbon atom in the compound constituting the wax is preferably 20 to 60, for example 25 to 45. A molecular weight of the wax may be 200 to 2,000, for example, 250 to 1,500 or 300 to 1,000. These may be used singly or in combination of two or more thereof.

The wax may have a melting point of 50°C or higher, 55°C or higher, 60°C or higher, 65°C or higher, or 70°C or higher, preferably 55°C or higher, more preferably 60°C or higher, and 200°C or lower, 150°C or lower, 130°C or lower, 120°C or lower, 110°C or lower, 100°C or lower, 80°C or lower, or 50°C or lower, and preferably 120°C or lower. The melting point of wax is measured according to JIS K 2235-1991.

[Amount of Wax]

The amount of wax may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the hydrocarbon group-containing polymer, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less.

{Organic Acid}

The repellent agent of the present disclosure may contain an organic acid. As the organic acid, a known organic acid can be used. Examples of the organic acid preferably include, for example, a carboxylic acid, a sulfonic acid, and a sulfinic acid, with the carboxylic acid being particularly preferred. Examples of the carboxylic acid include, for example, formic acid, acetic acid, propionic acid, butyric acid, oxalic acid, succinic acid, glutaric acid, adipic acid, malic acid, and citric acid, with the formic acid or acetic acid being particularly preferred. In the present disclosure, one type of organic acid may be used, or two or more thereof may be combined for use. For example, formic acid and acetic acid may be combined for use.

[Amount of Organic Acid]

The amount of organic acid may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the hydrocarbon group-containing polymer, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less. The amount of organic acid may be adjusted so that a pH of the repellent agent is 3 to 10, for example 5 to 9, particularly 6 to 8. For example, the repellent agent may be acidic (pH of 7 or less, for example 6 or less).

{Inorganic acid}

The repellent agent of the present disclosure may contain an inorganic acid. As the inorganic acid, a known inorganic acid can be used. Examples of the inorganic acid include hydrogen chloride, hydrogen bromide, hydrogen iodide, nitric acid, boric acid, sulfuric acid and phosphoric acid. In the present disclosure, one type of inorganic acid may be used, or two or more thereof may be combined for use. Addition of the inorganic acid can improve the stability of the water dispersion.

[Amount of inorganic acid]

The amount of the inorganic acid may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more or 100 parts by weight or more, and it may also be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less or 5 parts by weight or less relative to 100 parts by weight of the hydrocarbon group-containing polymer. The amount of the inorganic acid may be adjusted so that the pH of the repellent agent is 3 to 10, for example 5 to 9, particularly 6 to 8. The repellent agent may be acidic (pH of 7 or less, for example 6 or less).

{Curing agent}

The repellent agent of the present disclosure may contain a curing agent (active hydrogen-reactive compound or active hydrogen-containing compound). In the case where the repellent agent is for paper (for example, an oil-resistant agent for paper), it does not need to contain a curing agent.

The curing agent (cross-linking agent) in the repellent agent can effectively cure the repellent agent. The curing agent may be an active hydrogen-reactive compound or an active hydrogen-containing compound, which reacts with an active hydrogen or an active hydrogen-reactive group that the fluorine-containing polymer has. Examples of the active hydrogen-reactive compound include an isocyanate compound, epoxy compound, chloromethyl group-containing compound, carboxyl group-containing compound, and hydrazide compound. Examples of the active hydrogen-containing compound include a hydroxyl group-containing compound, an amino group-containing compound and a carboxyl group-containing compound, a ketone group-containing compound, a hydrazide compound, and a melamine compound.

The curing agent may contain an isocyanate compound. The isocyanate compound may be a polyisocyanate compound. The polyisocyanate compound is a compound having two or more isocyanate groups in one molecule. The polyisocyanate compound serves as a cross-linking agent. Examples of the polyisocyanate compound include, for example, an aliphatic polyisocyanate, an alicyclic polyisocyanate, an aromatic-aliphatic polyisocyanate, an aromatic polyisocyanate, and derivatives of these polyisocyanates. The isocyanate compound may be a blocked isocyanate compound (for example, a blocked polyisocyanate compound). The blocked isocyanate compound is a compound in

which an isocyanate group of an isocyanate compound is masked with a blocking agent to inhibit reaction.

Examples of the aliphatic polyisocyanates are aliphatic triisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, an aliphatic diisocyanate of 2,6-diisocyanatomethylcaproate, and aliphatic triisocyanates such as lysine ester triisocyanate, 1,4,8-triisocyanateoctane, 1,6,11-triisocyanatoundecane, 1,8-diisocyanato-4-isocyanatomethyloctane, 1,3,6-triisocyanatohexane, 2,5,7-trimethyl-1,8-diisocyanato-5-isocyanatomethyloctane. These may be used singly or in combination of two or more thereof.

Examples of the alicyclic polyisocyanates include, for example, an alicyclic diisocyanate and an alicyclic triisocyanate. Specific examples of the alicyclic polyisocyanate include 1,3-cyclopentene diisocyanate, 3-isocyanatomethyl-3,5,5-trimethylcyclohexyl isocyanate (isophorone diisocyanate), and 1,3,5-triisocyanatocyclohexane. These may be used singly or in combination of two or more thereof.

Examples of the aromatic-aliphatic polyisocyanate include an aromatic-aliphatic diisocyanate and aromatic-aliphatic triisocyanate. Specific examples of the aromatic-aliphatic polyisocyanate include 1,3- or 1,4-xylylene diisocyanate or a mixture thereof, 1,3- or 1,4-bis(1-isocyanato-1-methylethyl)benzene (tetramethyl xylylene diisocyanate) or a mixture thereof, and 1,3,5-triisocyanatomethylbenzene. These may be used singly or in combination of two or more thereof.

Examples of the aromatic polyisocyanates include an aromatic diisocyanate, aromatic triisocyanate, and aromatic tetraisocyanate. Specific examples of the aromatic polyisocyanate include, for example, m-phenylene diisocyanate, p-phenylene diisocyanate, 4,4'-diphenyl diisocyanate, 1,5-naphthalene diisocyanate, 2,4'- or 4,4'-diphenylmethane diisocyanate, or a mixture thereof, 2,4- or 2,6-tolylene diisocyanate or a mixture thereof, triphenylmethane-4,4',4" triisocyanate, and 4,4'-diphenylmethane-2,2',5,5'-tetraisocyanate. These may be used singly or in combination of two or more thereof.

Examples of the derivative of the polyisocyanate include various derivatives such as a dimer, trimer, biuret, allophanate, carbodiimide, urethodione, urethoimine, isocyanurate, and iminooxadiazinedione of the aforementioned polyisocyanate compounds. These may be used singly or in combination of two or more thereof.

These polyisocyanates can be used singly or in combination of two or more thereof.

As the polyisocyanate compound, a blocked polyisocyanate compound (blocked isocyanate), which is a compound obtained by blocking isocyanate groups of the polyisocyanate compound with a blocking agent, is preferably used. The blocked polyisocyanate compound is preferably used because it is relatively stable even in solution and can be used in the same solution as solution of the repellent agent.

The blocking agent is an agent that blocks free isocyanate groups. The blocked polyisocyanate compound, for example, can be heated 100°C or higher, for example, 130°C or higher to regenerate isocyanate groups, facilitating a reaction with hydroxyl groups. Examples of the blocking agent include, for example, a phenolic compound, lactam-based compound, aliphatic alcohol-based compound, and oxime-based compound. The polyisocyanate compound may be used singly or in combination of two or more thereof.

The epoxy compound is a compound having an epoxy group. Examples of the epoxy compound include epoxy compounds having a polyoxyalkylene group, such as a polyglycerol polyglycidyl ether and a polypropylene glycol diglycidyl ether; as well as a sorbitol polyglycidyl ether.

The chloromethyl group-containing compound is a compound having a chloromethyl group. Examples of the chloromethyl group-containing compound include, for example, a chloromethyl polystyrene.

The carboxyl group-containing compound is a compound having a carboxyl group. Examples of the carboxyl group-containing compound include, for example, a (poly)acrylic acid, and a (poly)methacrylic acid.

Specific examples of the ketone group-containing compound include, for example, a (poly)diacetone acrylamide, and diacetone alcohol.

Specific examples of the hydrazide compound include, for example, hydrazine, a carbohydrazide, and adipic acid hydrazide.

Specific examples of the melamine compound include, for example, a melamine resin and a methyl etherified melamine resin.

[Amount of Curing Agent]

The amount of the curing agent may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the hydrocarbon group-containing polymer, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, and 5 parts by weight or less.

{Other Component}

The repellent agent may contain a component other than the aforementioned components. Examples of the other components include, for example, polysaccharides, an agglomerating agent, a yield improver, a coagulant, a binder resin, an anti-slip agent, a sizing agent, a paper strengthening agent, a filler, an antistatic agent, an antiseptic agent, an ultraviolet absorber, an antibacterial agent, a deodorant, and a fragrance. These may be used singly or in combination of two or more thereof. In addition to the above components, as other components, for example, a repellent agent (for example, water-repellent and/or oil-repellent agents), a dispersant, a texture modifier, a softening agent, a flame retarder, a coating material fixing agent, a wrinkle-resistant agent, a drying rate adjuster, a cross-linking agent, a film formation agent, a compatibilizer, an antifreezing agent, a viscosity adjuster, an ultraviolet absorber, an antioxidant, a pH adjuster, an insect repellent, an antifoaming agent, an anti-shrinkage agent, a laundry wrinkle-resistant agent, a shape retention agent, a drape retention agent, an ironing improving agent, a brightening agent, a whitening agent, fabric softening clay, a migration-proofing agent such as a polyvinylpyrrolidone, a polymer dispersant, a soil release agent, a scum dispersant, a fluorescent brightening agent such as 4,4-bis(2-sulfostyryl)biphenyldisodium (Tinopal CBS-X manufactured by Ciba Specialty Chemicals Plc), a dye fixing agent, an anti-color fading agent such as 1,4-bis(3-aminopropyl) piperazine, a stain removing agent, enzymes such as cellulase, amylase, protease, lipase, and keratinase as fiber surface modifiers, a foam inhibitor, and silk protein powder that can impart texture and functions of silk such as moisture absorption and release properties, and surface modified products or emulsified dispersions thereof (for example, K-50, K-30, K-10, A-705, S-702, L-710, FP series (Idemitsu Petrochemical Co., Ltd.), hydrolyzed silk liquid (Jomo), SILKGEN G Soluble S (ICHIMARU PHARCOS Co., Ltd.)), an antifouling agent (for example, a nonionic polymer compound composed of an alkylene terephthalate and/or an alkylene isophthalate units and a polyoxyalkylene unit (for example, FR627 manufactured by GOO CHEMICAL CO., LTD.), SRC-1 manufactured by Clariant (Japan), K. K.), can be compounded. These may be used singly or in combination of two or more thereof. The components may be determined as appropriate depending on the application of the repellent agent.

[Amount of other components]

Each amount or the total amount of the other components may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more or 100 parts by weight or more, and it may also be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less or 5 parts by weight or less relative to 100 parts by weight of the hydrocarbon group-containing polymer.

<Pulp composition>

The pulp composition according to the present disclosure contains a hydrocarbon group-containing polymer and a pulp substrate. The pulp composition according to the present disclosure can be excellent in oil resistance.

The pulp composition according to the present disclosure can be obtained by adding a hydrocarbon group-containing polymer to a pulp substrate. The pulp composition may also be obtained by treating a pulp substrate with a repellent agent containing a hydrocarbon group-containing polymer, where the amount of the repellent agent added and the composition of the repellent agent may be adjusted so that each component is in the desired amount. Each component that may be contained in the repellent agent may also be separately added to the pulp composition as an additive.

The pulp composition according to the present disclosure may not have any one selected from the group consisting of a compound having a fluoroalkyl group having 8 or more carbon atoms, a compound having a perfluoroalkyl group having 8 or more carbon atoms, a compound having a fluoroalkyl group having 4 or more carbon atoms, a compound having a perfluoroalkyl group having 4 or more carbon atoms, a compound having a perfluoroalkyl group, a compound having a fluoroalkyl group, and a compound having a fluorine atom. The pulp composition according to the present disclosure can impart liquid repellency to a substrate even when not containing the above fluorine compounds.

The pH of the pulp composition may be 3 to 10, for example 5 to 9, particularly 6 to 8, and the amount of each component may be adjusted so as to achieve such a pH.

{Pulp substrate}

The pulp composition contains a pulp substrate. The pulp substrate is composed of pulp, and such pulp may be wood pulp, non-wood pulp, wastepaper pulp, or the like.

[Wood pulp]

The wood pulp includes needle leaf tree kraft pulp obtained from Abies, Pinus and others, and broad leaf tree kraft pulp obtained from Acacia, Eucalyptus, Fagus, Populus (for example, poplar) and others. Examples of the needle leaf tree kraft pulp include needle leaf tree unbleached kraft pulp (NUKP), needle leaf tree bleached pulp (NBKP), needle leaf tree semi-bleached kraft pulp (NSBKP) and needle leaf tree sulfite pulp. Also, examples of the broad leaf tree kraft pulp include broad leaf tree unbleached kraft pulp (LUKP), broad leaf tree bleached kraft pulp (LBKP), broad leaf tree semi-bleached kraft pulp (LSBKP) and broad leaf tree sulfite pulp. Note that the pulp to be used may be used alone or in combination.
Also, besides the kraft pulp, in addition to the needle leaf tree kraft pulp and the broad leaf tree kraft pulp, there is mechanical pulp such as stone ground pulp (SGP), pressurized stone ground pulp (PGW), refiner ground pulp (RGP), thermoground pulp (TGP), chemiground pulp (CGP), groundwood pulp (GP) and thermomechanical pulp (TMP). Furthermore, as the wastepaper pulp, there is disintegrated wastepaper pulp, disintegrated and deinked wastepaper pulp, or disintegrated, deinked and bleached wastepaper pulp produced from brown wastepaper, wastepaper kraft envelope wastepaper, magazine wastepaper, newspaper wastepaper, flyer wastepaper, office wastepaper, corrugated cardboard wastepaper, hard white wastepaper, Kent wastepaper, imitation wastepaper, chikenshi wastepaper, and the like.

[Non-wood pulp]

Examples of the non-wood pulp include pulp obtained from bagasse, kenaf, bamboo, linter, cotton, linen, hemp, ramie, straw, esparto, Manila hemp, sisal hemp, jute, flax, ganpi (Diplomorpha shikokiana), mitsumata (Edgeworthia chrysantha), kozo (Broussonetia kazinoki × papyrifera), and the like.

[Fiber length of pulp]

The average fiber length of pulp is preferably 0.1 mm or more, more preferably 0.3 mm or more, and further preferably 0.5 mm or more from the viewpoint of improving oil resistance, and preferably 5.0 mm or less, more preferably 4.0 mm or less, further preferably 3.0 mm or less, particularly preferably 2.0 mm or less, and most preferably 1.2 mm or less from the viewpoint of ease of production.

[Fiber width of pulp]

The average fiber diameter of pulp is, from the viewpoint of improving oil resistance, preferably 5 μm or more, more preferably 10 μm or more, and further preferably 15 μm or more, and it is also preferably 50 μm or less, more preferably 40 μm or less, and further preferably 30 μm or less.

[Form of pulp substrate]

The form of the pulp substrate when a hydrocarbon group-containing polymer is added may be pulp alone, pulp slurry, a pulp product, or the like, and specific examples thereof include pulp such as bleached or unbleached chemical pulp including kraft pulp and sulfite pulp, and bleached or unbleached high-yield pulp such as groundwood pulp, mechanical pulp or thermomechanical pulp; pulp slurry containing the above pulp; and a pulp product such as paper, a paper container and a pulp molded article.

[Amount of pulp substrate]

The amount of the pulp substrate may be 0.1% by weight or more, 0.5% by weight or more, 1% by weight or more, 3% by weight or more, 5% by weight or more, 10% by weight or more, 20% by weight or more, 30% by weight or more, 50% by weight or more, 75% by weight or more or 90% by weight or more, and it may also be 99% by weight or less, 75% by weight or less, 50% by weight or less, 40% by weight or less, 30% by weight or less, 20% by weight or less, 10% by weight or less, 5% by weight or less, 4% by weight or less or 3% by weight or less in the pulp composition. In the case where the pulp composition is prepared by internal addition, the amount of the pulp substrate may be 30% by weight or less in the pulp composition, and in the case where the pulp composition is prepared by external addition, the amount of the pulp substrate may be 75% by weight or more in the pulp composition.
The amount of the pulp substrate may be 50% by weight or more, 60% by weight or more, 70% by weight or more, 80% by weight or more, 90% by weight or more, 95% by weight or more or 99% by weight or more, and it may also be 99.9% by weight or less, 95% by weight or less, 90% by weight or less, 85% by weight or less, 75% by weight or less, 65% by weight or less or 55% by weight or less in the pulp composition from which the liquid medium has been excluded.

{Liquid medium}

The pulp composition may contain a liquid medium. The liquid medium may be water, an organic solvent, or a mixture of water and an organic solvent, and is typically an aqueous medium (water, or a mixture of water and an organic solvent), in particular water. The liquid medium may include a liquid medium derived from the repellent agent.

[Amount of liquid medium]

The amount of the liquid medium may be 0.1% by weight or more, 0.5% by weight or more, 1% by weight or more, 3% by weight or more, 5% by weight or more, 10% by weight or more, 20% by weight or more, 30% by weight or more, 50% by weight or more, 75% by weight or more, 90% by weight or more or 95% by weight or more, and it may also be 99% by weight or less, 75% by weight or less, 50% by weight or less, 40% by weight or less, 30% by weight or less, 20% by weight or less, 10% by weight or less, 5% by weight or less, 4% by weight or less or 3% by weight or less in the pulp composition. Typically, in the case where the pulp composition is prepared by internal addition, the amount of the liquid medium may be 50% by weight or more, in particular 90% by weight or more, in the pulp composition, and in the case where the pulp composition is prepared by external addition, the amount of the liquid medium may be 30% by weight or less, in particular 10% by weight or less, in the pulp composition.

{Hydrocarbon group-containing polymer}

The pulp composition contains a hydrocarbon group-containing polymer. For details on the hydrocarbon group-containing polymer, the explanation about the hydrocarbon group-containing polymer in the above <Repellent agent> applies.

[Amount of hydrocarbon group-containing polymer]

The amount of the hydrocarbon group-containing polymer may be 0.01% by weight or more, 0.03% by weight or more, 0.1% by weight or more, 0.3% by weight or more, 0.5% by weight or more, 0.75% by weight or more, 1.0% by weight or more, 2.0% by weight or more or 3.0% by weight or more, and is preferably 0.03% by weight or more, for example 0.5% by weight or more, relative to the pulp substrate. Also, it may be 25% by weight or less, 20% by weight or less, 15% by weight or less, 10% by weight or less, 7.5% by weight or less, 5.0% by weight or less, 4.0% by weight or less, 3.0% by weight or less, 2.0% by weight or less, 1.0% by weight or less, 0.75% by weight or less or 0.5% by weight or less, and is for example, 15% by weight or less or 5.0% by weight or less, preferably 3.0% by weight or less.

The hydrocarbon group-containing polymer may be used for an external addition treatment on the surface of a pulp substrate (for example, a pulp product such as paper, a paper container and a pulp molded article). The amount of the hydrocarbon group-containing polymer included in a coating layer formed by the external addition treatment may be 0.01 $g/m^2$ or more, 0.03 $g/m^2$ or more, 0.05 $g/m^2$ or more, 0.1 $g/m^2$ or more, 0.3 $g/m^2$ or more, 0.5 $g/m^2$ or more or 1.0 $g/m^2$ or more, and it may also be 5.0 $g/m^2$ or less, 4.0 $g/m^2$ or less, 3.0 $g/m^2$ or less, 2.0 $g/m^2$ or less, 1.0 $g/m^2$ or less, 0.5 $g/m^2$ or less, 0.3 $g/m^2$ or less or 0.1 $g/m^2$ or less.

{Lignin compound}

The pulp composition preferably contains a lignin compound. For details on the lignin compound, the explanation about the lignin compound in <Repellent agent> applies.

[Amount of lignin compound]

The amount of the lignin compound may be 0.1% by weight or more, 0.3% by weight or more, 0.5% by weight or more, 0.75% by weight or more, 1.0% by weight or more, 2.0% by weight or more or 3.0% by weight or more relative to the pulp substrate. Also, it may be 10% by weight or less, 7.5% by weight or less, 5.0% by weight or less, 4.0% by weight or less, 3.0% by weight or less, 2.0% by weight or less, 1.0% by weight or less, 0.75% by weight or less or 0.5% by weight or less, and is preferably 5.0% by weight or less, and more preferably 3.0% by weight or

less.

{Dispersant}

The pulp composition may contain a dispersant. For details on the dispersant, the explanation about the

dispersant in <Repellent agent> applies.

[Amount of Dispersant]

The amount of the dispersant may be 0.1% by weight or more, 0.3% by weight or more, 0.5% by weight or more, 0.75% by weight or more, 1.0% by weight or more, 2.0% by weight or more or 3.0% by weight or more relative to the pulp substrate. Also, it may be 10% by weight or less, 7.5% by weight or less, 5.0% by weight or less, 4.0% by weight or less, 3.0% by weight or less, 2.0% by weight or less, 1.0% by weight or less, 0.75% by weight or less or 0.5% by weight or less, and is preferably 5.0% by weight or less, and more preferably 3.0% by weight or less.

{Paper strength agent}

The pulp composition may contain a paper strength agent. Examples of the paper strength agent include:

a polyacrylamide paper strength agent such as cationic polyacrylamide, anionic polyacrylamide and amphoteric polyacrylamide;
a polysaccharide paper strength agent such as starch, enzyme-modified starch, thermochemically modified starch, oxidized starch, esterified starch, etherified starch (such as hydroxyethylated starch), aldehyde starch, cationic starch, starch, xanthan gum, karaya gum, welan gum, guar gum, pectin, tamarind gum, carrageenan, chitosan, gum arabic, locust bean gum, cellulose, alginic acid, agar, dextran, cellulose, carboxymethyl cellulose, hydroxyethyl cellulose, hydroxypropyl cellulose, chitin nanofibers, cellulose nanofibers and pullulan, as well as a modified polysaccharide thereof (for example, a modified polysaccharide to which hydroxyl groups or cationic groups have been introduced);
a polyamide paper strength agent such as a polyamide resin, a polyamine resin, a polyamide-polyamine resin, a polyamide-epichlorohydrin resin, a polyamide-polyamine-epichlorohydrin resin, a polyamide-polyurea-formaldehyde resin and an epoxidized polyamide resin;
a urea/melamine paper strength agent such as a urea resin, a melamine resin, a urea-formaldehyde resin and a melamine-formaldehyde resin;
a polyvinyl alcohol paper strength agent such as polyvinyl alcohol, completely saponified polyvinyl alcohol, partially saponified polyvinyl alcohol, carboxyl-modified polyvinyl alcohol, silanol-modified polyvinyl alcohol, cation-modified polyvinyl alcohol and terminal alkyl-modified polyvinyl alcohol; and
a styrene-butadiene copolymer, polyvinyl acetate, a vinyl chloride-vinyl acetate copolymer, polyvinyl chloride, polyvinylidene chloride, polyacrylate ester, fatty acid diamide, a polyethyleneimine resin and a ketone aldehyde resin.

As the paper strength agent according to the present disclosure, a polyacrylamide paper strength agent, a polysaccharide paper strength agent or a polyamide paper strength agent is preferred.

[Amount of paper strength agent]

The amount of the paper strength agent may be 0.1% by weight or more, 0.3% by weight or more, 0.5% by weight or more, 0.75% by weight or more, 1.0% by weight or more, 2.0% by weight or more or 3.0% by weight or more relative to the pulp. Also, it may be 10% by weight or less, 7.5% by weight or less, 5.0% by weight or less, 4.0% by weight or less, 3.0% by weight or less, 2.0% by weight or less, 1.0% by weight or less, 0.75% by weight or less or 0.5% by weight or less, and is preferably 5.0% by weight or less.

{Sizing agent}

The pulp composition may contain a sizing agent. Examples of the sizing agent include a cationic sizing agent, an anionic sizing agent, a neutral sizing agent and an amphoteric sizing agent, and examples thereof include a rosin-based sizing agent (for example, an acidic rosin-based sizing agent and a neutral rosin-based sizing agent), an alkyl ketene dimer and an alkenyl succinic anhydride.

[Amount of sizing agent]

The amount of the sizing agent may be 0.1% by weight or more, 0.2% by weight or more, 0.3% by weight or more, 0.5% by weight or more, 0.75% by weight or more, 1.0% by weight or more, 2.0% by weight or more or 3.0% by weight or more relative to the pulp. Also, it may be 10% by weight or less, 7.5% by weight or less, 5.0% by weight or less, 4.0% by weight or less, 3.0% by weight or less, 2.0% by weight or less, 1.0% by weight or less, 0.75% by weight or less or 0.5% by

weight or less.

{Other additives}

In addition to the above, the pulp composition may contain other additives including known combination chemicals for paper used in the production of pulp products such as a fixing agent (a water-soluble aluminum compound such as aluminum sulfate and polyaluminum chloride), a coagulant and an agglomerating agent (such as a polyamine resin), a yield improver (such as a polyacrylamide resin), an organic acid (such as formic acid and acetic acid), a dye, a slime control agent and an antifoaming agent.

[Amount of other additives]

The amount of each of the other additives may be 0.01% by weight or more, 0.1% by weight or more, 1% by weight or more, 3% by weight or more or 5% by weight or more, and it may also be 30% by weight or less, 20% by weight or less, 10% by weight or less, 5% by weight or less, 3% by weight or less or 1% by weight or less relative to the pulp substrate.

<Method for producing product>

The method for producing a product according to the present disclosure may include a step of treating a substrate using the repellent agent of the present disclosure as a treatment agent.
The substrate to be treated with the treatment agent according to the present disclosure is not limited, but it is suitably a fibrous substrate (a fiber substrate). In particular, it may be a textile substrate (a fabric substrate) or a pulp substrate (a paper substrate), and it is particularly a pulp substrate.
Examples of the fibrous substrates include animal and vegetable natural fibers such as cotton, linen, wool, and silk, synthetic fibers such as a polyamide, a polyester, a polyvinyl alcohol, a polyacrylonitrile, a polyvinyl chloride, and a polypropylene, and semi-synthetic fibers such as rayon and acetate, inorganic fibers such as a glass fiber, a carbon fiber, and an asbestos fiber, or blended fibers thereof. The textile products include a woven fabric, a knitted fabric, a nonwoven fabric, fabric in the form of clothing (for example, water-repellent garments, for example, a raincoat) and carpets, and a fiber, yarn and intermediate fiber product (for example, a sliver or a crude yarn) in a state of before being formed into fabric, may undergo treatment.
A substrate to be treated with the treatment agent of the present disclosure is not limited to a fibrous substrate, and it may also include, for example, stone, a filter (for example, an electrostatic filter), a dust-protective mask, fuel cell parts (for example, a gas diffusion electrode and a gas diffusion support), glass, wood, leather, fur, asbestos, brick, cement, metal and oxide, a ceramic product, a plastic, a painted surface, and a plaster.
When the substrate is glass, a glass product to be produced may be an optical member. A certain layer (or film), such as a hard coat layer or an antireflection layer, may be formed on the surface (outermost layer) of a glass substrate. The antireflection layer may be any of a single-layer antireflection layer and a multi-layer antireflection layer. Examples of inorganic substances usable in the antireflection layer include $SiO_2$, SiO, $ZrO_2$, $TiO_2$, TiO, $Ti_2O_3$, $Ti_2O_5$, $Al_2O_3$, $Ta_2O_5$, $CeO_2$, MgO, $Y_2O_3$, $SnO_2$, $MgF_2$, and $WO_3$. One of these inorganic substances may be used singly, or two or more may be used in combination (e.g., as a mixture). In the case of a multi-layer antireflection layer, $SiO_2$ and/or SiO is preferably used in the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

{Method for producing pulp product}

The pulp product (paper product) according to the present disclosure can be obtained by subjecting a pulp composition obtained by treating a pulp substrate with a repellent agent containing a hydrocarbon group-containing polymer to a treatment step such as drying, heating, or molding, if necessary. The pulp product may be an oil-resistant pulp product formed by a treatment with an oil-resistant agent.
The repellent agent according to the present disclosure can be applied to a pulp substrate as a treatment agent (particularly a surface-treating agent) by a conventionally known method. The treatment method may be a method for dispersing the repellent agent according to the present disclosure in an organic solvent or water, if necessary, to dilute it and allowing it to be adhered to the inside and/or on the surface of a pulp substrate by a known method such as dip coating, spray coating and foam coating, and drying the liquid. The dilution factor may be changed as appropriate depending on the concentration and application of the repellent agent, but it may be 3 to 2,000 times, for example 10 to 100 times. After

drying, a pulp product to which a solid component of the repellent agent has been adhered, is obtained. If necessary, the repellent agent of the present disclosure may be applied in combination of a suitable crosslinking agent, and curing may be carried out.

The repellent agent can be applied to a pulp substrate by any of methods known for treating a pulp substrate with a liquid. The pulp substrate may be immersed in the repellent agent, the pulp substrate and the repellent agent may be mixed, or the solution may be adhered or sprayed onto the pulp substrate. The treated pulp substrate is preferably dried and cured by heating in order to develop liquid-repellency. The heating temperature may be, for example, 100°C to 200°C, 100°C to 170°C, or 100°C to 120°C. In the present disclosure, the heating time may be 5 seconds to 60 minutes, for example, 30 seconds to 3 minutes.

As the method for treating the pulp substrate, the following methods can be employed: an internal addition treatment method in which the repellent agent is added to the pulp substrate before papermaking (for example, in the form of pulp slurry), or an external addition treatment method in which the repellent agent is applied to the pulp substrate after papermaking (for example, pulp product). Examples of the internal addition treatment method include mixing and dipping, which may include a step of adding the repellent agent to the pulp slurry and stirring and mixing them. Examples of the external addition treatment method include spraying, coating, dip treatment and foam coating, with specific examples including a pound-type two-roll size press, a gate roll type, and a rod metering type size press. The treatment may be an external addition treatment or an internal addition treatment. When the pulp substrate is paper, the paper may be coated with the repellent agent, the solution may be adhered or sprayed onto the paper, or the repellent agent may be mixed with the pulp slurry before papermaking for the treatment. In the case where the pulp substrate is a fiber material, examples of the treatment method include a padding treatment, a dip treatment, a spray treatment and a coating treatment. Examples of padding treatment include the method involving using the padding apparatus as described on pages 396 to 397 of Seni Sensyoku Kako Jiten (in Japanese; Fiber-dyeing process dictionary) (published by THE NIKKAN KOGYO SHIMBUN, LTD., 1963) and pages 256 to 260 of Irozome Kagaku (in Japanese; dyeing chemistry) III (published by Jikkyo Shuppan Co., Ltd., 1975). Examples of the coating treatment include the method involving using a coating machine as described on pages 473 to 477 of Sensyoku Shiage Kiki Soran (in Japanese; Comprehensive guide to dyeing and finishing machines) (published by Fiber Japan CO., LTD., 1981). Examples of the dip treatment include the method involving using a batch type dyeing machine as described in pages 196 to 247 of Sensyoku Shiage Kiki Soran (in Japanese) (published by Fiber Japan CO., LTD., 1981), and for example, a jet dyeing machine, air flow dyeing machine, drum dyeing machine, wince dyeing machine, washer dyeing machine, and cheese dyeing machine can be used. Examples of the spray treatment includes a method involving using an air spray that nebulizes and sprays a treatment liquid by compressed air, or an air spray by hydraulic pressure nebulization system.

The treatment method may be an internal addition treatment in which the repellent agent is added to the pulp slurry before papermaking. The internal addition treatment may include filling a mold with the pulp slurry and allowing a liquid medium to permeate out of the mold to mold pulp. For example, the internal addition treatment may include, but is not limited to, one or more of the following steps: adding the repellent agent to the pulp slurry and stirring and mixing them; sucking and dehydrating the pulp composition prepared in the above step through a net-like body of predetermined shape and depositing the pulp composition to form a pulp molded article intermediate; and molding and drying the pulp molded article intermediate by using a molding mold that has been heated to obtain a pulp molded article. After having been lightly dried at room temperature or elevated temperature, the treated paper may be optionally subjected to a heat treatment, depending on the nature of the paper. The temperature of the heat treatment may be 150°C or higher, 180°C or higher or 210°C or higher. Also, it may be 300°C or lower, 250°C or lower or 200°C or lower, and in particular, it may be 80°C to 180°C. Carrying out the heat treatment in such a temperature range enables exhibiting excellent oil resistance, for example. The pulp substrate that has been subjected to the internal addition treatment may be subjected to an external addition treatment and treated with the repellent agent, allowing the hydrocarbon group-containing polymer and the repellent agent to be further adhered to the surface.

The treatment method may be an external addition treatment in which the repellent agent is applied to the pulp substrate after papermaking. A size press used in the external addition treatment can be divided into the following types depending on the coating method. One coating method involves supplying a coating liquid (size liquid) to a nip portion formed by passing paper between two rubber rolls, creating a pool of the coating liquid called a pond, and allowing the paper to pass through this pool to coat both sides of the paper with the size liquid, which is a method employed for a so-called pound-type two-roll size press. Another coating method is a method used for a gate roll type size press in which a size liquid is applied by a surface transfer type, and a rod metering type size press. In the pound-type two-roll size press, the size liquid easily penetrates into an inside of paper, and in the surface transfer type, a size liquid component is likely to stay on a surface of the paper. In the surface transfer type, a coating layer is likely to stay on a surface of paper more than in the pound-type two-roll size press, and the amount of coating layer formed on the surface is more than in the pound-type two-roll size press. In the present disclosure, even in the case of using the former pound-type two-roll size press, performance can be imparted to paper. After having been lightly dried at room temperature or elevated temperature, the paper treated in such a manner is arbitrarily accompanied by heat treatment that can have a temperature range of up to 300°C, for example

up to 200°C, and particularly the temperature range of 80°C to 180°C, depending on the nature of the paper, as a result of which excellent oil resistance and the like can be exhibited.

Specific examples of the pulp product include paper, a paper container, a pulp molded article, a food packaging material, a food container, gypsum liner board base paper, coated base paper, medium-quality paper, a general liner and core, neutral pure white roll paper, a neutral liner, a rustproof liner and metal pasted paper, kraft paper, neutral printing writing paper, neutral coated base paper, neutral PPC paper, neutral thermal paper, neutral pressure-sensitive base paper, neutral inkjet paper and neutral information paper. Suitable examples of the pulp product include a food packaging material and a food container, with examples including a pulp product for the food contact application, in particular a pulp molded article for the food contact application.

Embodiments have been described above, but it will be understood that various modifications can be made to embodiments and details without departing from the spirit and the scope of the claims.

Examples

The present disclosure will be described in more detail below by way of Examples, but the present disclosure is not limited to these Examples.

<Test method>

The test procedures are as follows.

{High temperature oil resistance}

100 ml of an evaluation liquid (corn oil) at 65°C or 80°C was poured into a molded pulp product that had been molded into a container shape, allowed to stand for 45 minutes or 30 minutes, then the evaluation liquid was discarded, and how much the evaluation liquid penetrated into the molded pulp product (container) was visually evaluated in accordance with the following criteria.

4: Substantially no oil stain on inside bottom of container
3: No oil stain on outside bottom of container
2: Oil stain on less than 5% of area of outside bottom of container
1: Oil stain on 5% or more and less than 50% of area of outside bottom of container
0: Oil stain on 50% or more of area of outside bottom of container

{High temperature water resistance}

100 ml of an evaluation liquid (water) at 100°C was poured into a molded pulp product that had been molded into a container shape, allowed to stand for 30 minutes, then the evaluation liquid was discarded, and how much the evaluation liquid penetrated into the molded pulp product (container) was visually evaluated in accordance with the following criteria.

4: Substantially no liquid stain on inside bottom of container
3: No liquid stain on outside bottom of container
2: Liquid stain on less than 5% of area of outside bottom of container
1: Liquid stain on 5% or more and less than 50% of area of outside bottom of container
0: Liquid stain on 50% or more of area of outside bottom of container

{Product stability}

The stability of the liquid-repellent agent was visually evaluated when 40 g thereof was placed in a 50 ml glass bottle and allowed to stand at 20°C, in accordance with the following criteria.

○: No precipitation or separation for 4 weeks.
△: No precipitation or separation for 1 week, but precipitation or separation observed within 4 weeks.
×: Precipitation or separation observed within 1 week.

<Synthesis Example 1>

In a 1 L plastic container, 97 parts of stearic acid amide ethyl acrylate, 3 parts of hydroxybutyl acrylate (HBA), 370

parts of pure water, 3 parts of sodium lignosulfonate and 12 parts of polyoxyethylene alkyl ether were put, heated to 80°C, and then emulsified and dispersed with ultrasonic waves for 15 minutes. The emulsified dispersion was transferred to a 1,000 cc four-neck flask equipped with a nitrogen gas inlet, a thermometer, a stirring rod and a reflux tube. After nitrogen replacement, 1 part of ammonium persulfate was added thereto, and the mixture was allowed to react at 60°C for 4 hours to give an aqueous dispersion of the polymer. Thereafter, pure water was added to prepare a water dispersion (oil-resistant agent) with a solid concentration of 20% by weight.

<Synthesis Example 2>

In a 1 L plastic container, 100 parts of stearic acid amide ethyl acrylate, 370 parts of pure water, 3 parts of sodium lignosulfonate and 12 parts of polyoxyethylene alkyl ether were put, and a water dispersion was prepared by the same method as in Synthesis Example 1.

<Synthesis Example 3>

In a 1 L plastic container, 97 parts of stearic acid amide ethyl acrylate, 3 parts of hydroxybutyl acrylate (HBA), 370 parts of pure water and 12 parts of polyoxyethylene alkyl ether were put, and a water dispersion was prepared by the same method as in Synthesis Example 1.

<Synthesis Example 4>

In a 1 L plastic container, 100 parts of stearic acid amide ethyl acrylate, 370 parts of pure water and 12 parts of polyoxyethylene alkyl ether were put, and a water dispersion was prepared by the same method as in Synthesis Example 1.

<Synthesis Example 5>

In a 1 L plastic container, 97 parts of stearic acid amide ethyl acrylate, 3 parts of hydroxybutyl acrylate (HBA), 370 parts of pure water and 12 parts of polyoxyethylene alkyl ether were put, heated to 80°C, and then emulsified and dispersed with ultrasonic waves for 15 minutes. The emulsified dispersion was transferred to a 1,000 cc four-neck flask equipped with a nitrogen gas inlet, a thermometer, a stirring rod and a reflux tube. After nitrogen replacement, 1 part of 2,2'-azobis(2-methylpropionamidine) dihydrochloride was added thereto, and the mixture was allowed to react at 60°C for 4 hours to give an aqueous dispersion of the polymer. Thereafter, pure water was added to prepare a water dispersion with a solid concentration of 20% by weight.

<Synthesis Example 6>

In a 1 L plastic container, 100 parts of stearic acid amide ethyl acrylate, 370 parts of pure water, 0.8 parts of acetic acid and 12 parts of polyoxyethylene alkyl ether were put, and a water dispersion was prepared by the same method as in Synthesis Example 5.

<Synthesis Example 7>

In a 1 L plastic container, 100 parts of stearic acid amide ethyl acrylate, 370 parts of pure water, 0.8 parts of acetic acid, 7 parts of alkyl bis(2-hydroxyalkyl)methylammonium chloride and 3 parts of polyoxyethylene alkyl ether were put, and a water dispersion was prepared by the same method as in Synthesis Example 5.

<Synthesis Example 8>

In a 1 L plastic container, 93 parts of stearic acid amide ethyl acrylate, 7 parts of hydroxybutyl acrylate (HBA), 370 parts of pure water, 3 parts of sodium lignosulfonate and 12 parts of polyoxyethylene alkyl ether were put, and a water dispersion was prepared by the same method as in Synthesis Example 1.

<Synthesis Example 9>

In a 1 L plastic container, 96 parts of stearic acid amide ethyl acrylate, 3 parts of hydroxybutyl acrylate (HBA), 1 part of dimethylaminoethyl methacrylate (DM), 0.5 parts of acetic acid, 370 parts of pure water, 3 parts of sodium lignosulfonate and 12 parts of polyoxyethylene alkyl ether were put, and a water dispersion was prepared by the same

method as in Synthesis Example 1.

<Synthesis Example 10>

In a 1 L plastic container, 100 parts of stearic acid amide ethyl acrylate, 10 parts of tripropylene glycol, 360 parts of pure water, 13 parts of polyoxyethylene alkyl ether and 2 parts of lauric acid were put, heated to 80°C, and then emulsified and dispersed with ultrasonic waves for 15 minutes. The emulsified dispersion was transferred to a 1,000 cc four-neck flask equipped with a nitrogen gas inlet, a thermometer, a stirring rod and a reflux tube. After nitrogen replacement, 1 part of ammonium persulfate was added thereto, and the mixture was allowed to react at 60°C for 4 hours to give an aqueous dispersion of the polymer. To the emulsion, 3 parts of sodium lignosulfonate was added, and the mixture was stirred for dispersion. Thereafter, pure water was added to prepare a water dispersion with a solid concentration of 20% by weight.

<Synthesis Example 11>

In a 1 L plastic container, 100 parts of stearic acid amide ethyl acrylate, 10 parts of tripropylene glycol, 360 parts of pure water, 13 parts of polyoxyethylene alkyl ether and 2 parts of sorbitan monostearate (NIKKOL SS-10V manufactured by Nikko Chemicals Co., Ltd.) were put, heated to 80°C, and then emulsified and dispersed with ultrasonic waves for 15 minutes. The emulsified dispersion was transferred to a 1,000 cc four-neck flask equipped with a nitrogen gas inlet, a thermometer, a stirring rod and a reflux tube. After nitrogen replacement, 1 part of ammonium persulfate was added thereto, and the mixture was allowed to react at 60°C for 4 hours to give an aqueous dispersion of the polymer. To the emulsion, 3 parts of sodium lignosulfonate was added, and the mixture was stirred for dispersion. Thereafter, pure water was added to prepare a water dispersion with a solid concentration of 20% by weight.

<Synthesis Example 12>

In a 1 L plastic container, 100 parts of stearic acid amide ethyl acrylate, 10 parts of tripropylene glycol, 360 parts of pure water, 13 parts of polyoxyethylene alkyl ether and 2 parts of sorbitan tristearate (NIKKOL SS-30V manufactured by Nikko Chemicals Co., Ltd.) were put, heated to 80°C, and then emulsified and dispersed with ultrasonic waves for 15 minutes. The emulsified dispersion was transferred to a 1,000 cc four-neck flask equipped with a nitrogen gas inlet, a thermometer, a stirring rod and a reflux tube. After nitrogen replacement, 1 part of ammonium persulfate was added thereto, and the mixture was allowed to react at 60°C for 4 hours to give an aqueous dispersion of the polymer. To the emulsion, 3 parts of sodium lignosulfonate was added, and the mixture was stirred for dispersion. Thereafter, pure water was added to prepare a water dispersion with a solid concentration of 20% by weight.

<Comparative Synthesis Example 1>

In a 1 L plastic container, 90 parts of stearic acid amide ethyl acrylate, 10 parts of hydroxybutyl acrylate (HBA), 370 parts of pure water, 3 parts of sodium lignosulfonate and 12 parts of polyoxyethylene alkyl ether were put, and a water dispersion was prepared by the same method as in Synthesis Example 1.

<Comparative Synthesis Example 2>

In a 1 L plastic container, 90 parts of stearic acid amide ethyl acrylate, 7 parts of hydroxybutyl acrylate (HBA), 3 parts of dimethylaminoethyl methacrylate (DM), 0.5 parts of acetic acid, 370 parts of pure water, 3 parts of sodium lignosulfonate and 12 parts of polyoxyethylene alkyl ether were put, and a water dispersion was prepared by the same method as in Synthesis Example 1.

<Comparative Synthesis Example 3>

In a 1 L plastic container, 90 parts of stearic acid amide ethyl acrylate, 7 parts of hydroxybutyl acrylate (HBA), 3 parts of dimethylaminoethyl methacrylate (DM), 0.5 parts of acetic acid, 370 parts of pure water, 7 parts of alkyl bis(2-hydroxyalkyl)methylammonium chloride and 3 parts of polyoxyethylene alkyl ether were put, and a water dispersion was prepared by the same method as in Synthesis Example 5.

<Comparative Synthesis Example 4>

In a 1 L plastic container, 90 parts of stearic acid amide ethyl acrylate, 7 parts of hydroxybutyl acrylate (HBA), 3 parts of dimethylaminoethyl methacrylate (DM), 0.5 parts of acetic acid, 370 parts of pure water and 12 parts of

polyoxyethylene alkyl ether were put, and a water dispersion was prepared by the same method as in Synthesis Example 5.

<Example 1>

2,000 g of a 0.5 wt% water dispersion of a mixture of 70 parts of beaten broad leaf tree bleached kraft pulp and 30 parts of needle leaf tree bleached kraft pulp, whose freeness was 550 cc (Canadian freeness), was added with stirring, 2 g of the water dispersion of Synthesis Example 1 diluted to a solid content of 10% with water was then added, and stirring was continued for 1 minute. Next, 0.16 g of cationic polyamine (Hercobond (registered trademark) 6950 manufactured by Solenis) diluted to a solid content of 10% was added, and the mixture was stirred for 1 minute or 120 minutes.

The above pulp slurry was placed in a metal tank. At the bottom of the tank, a metal molded pulp-molding mold provided with a large number of suction holes was present with a net-like body placed on top of it. The pulp-containing aqueous composition was suctioned and dehydrated through the molded pulp-molding mold and the net-like body by a vacuum pump from the side opposite to the side of the molded pulp-molding mold where the net-like body was placed, thereby depositing the solids (pulp and others) contained in the pulp-containing aqueous composition on the net-like body to obtain a molded pulp intermediate. Next, the obtained molded pulp intermediate was dried by applying pressure from above and below using a metal male-female molding mold that had been heated to 60 to 200°C. As a result, a molded pulp product in the shape of a container was produced. Table 1 shows the content proportion of each component relative to the pulp in the resulting molded pulp product, as well as the results of evaluation of high temperature oil resistance and water resistance performance and product stability.

<Example 2>

The experiment was carried out in the same manner as in Example 1, except for adding 1.5 g of the water dispersion of Synthesis Example 1 diluted to a solid content of 10% with water, and after adding the cationic polyamine (Hercobond (registered trademark) 6950 manufactured by Solenis) and stirring the mixture, adding 0.8 g of amphoteric polyacrylamide (product name: Harmide T2, manufactured by Harima Chemicals Group, Inc.) diluted to a solid content of 10% with water and stirring the mixture for 1 minute, after which 0.8 g of amphoteric polyacrylamide (product name: Harmide KS38, manufactured by Harima Chemicals Group, Inc.) diluted to a solid content of 10% with water was added and the mixture was stirred for 1 minute. Table 1 shows the content proportion of each component relative to the pulp in the resulting molded pulp product, as well as the results of evaluation of high temperature oil resistance and water resistance performance and product stability.

<Example 3>

The experiment was carried out in the same manner as in Example 1, except for adding 1.5 g of the water dispersion of Synthesis Example 1 diluted to a solid content of 10% with water, and adding 0.8 g of amphoteric polyacrylamide (product name: Harmide T2, manufactured by Harima Chemicals Group, Inc.) diluted to a solid content of 10% with water and stirring the mixture for 1 minute, after which 0.8 g of amphoteric polyacrylamide (product name: Harmide KS38, manufactured by Harima Chemicals Group, Inc.) diluted to a solid content of 10% with water was added and the mixture was stirred for 1 minute, and 0.3 g of aluminum sulfate diluted to a solid content of 1% was added and the mixture was stirred for 1 minute. Table 1 shows the content proportion of each component relative to the pulp in the resulting molded pulp product, as well as the results of evaluation of high temperature oil resistance and water resistance performance and product stability.

<Example 4>

The experiment was carried out in the same manner as in Example 3, except for adding 0.3 g of an aqueous solution of an alkyl ketene dimer (AKD) (Hercon (registered trademark) 79 manufactured by Solenis) with a solid content of 5% as a sizing agent, and stirring the mixture for 1 minute. Table 1 shows the content proportion of each component relative to the pulp in the resulting molded pulp product, as well as the results of evaluation of high temperature oil resistance performance and high temperature water resistance performance.

<Example 5>

The experiment was carried out in the same manner as in Example 1, except for adding 2.0 g of the water dispersion of Synthesis Example 2 diluted to a solid content of 10% with water. Table 1 shows the content proportion of each component relative to the pulp in the resulting molded pulp product, as well as the results of evaluation of high

temperature oil resistance performance and high temperature water resistance performance.

<Example 6>

The experiment was carried out in the same manner as in Example 2, except for adding 1.2 g of the water dispersion of Synthesis Example 2 diluted to a solid content of 10% with water. Table 1 shows the content proportion of each component relative to the pulp in the resulting molded pulp product, as well as the results of evaluation of high temperature oil resistance performance and high temperature water resistance performance.

<Example 7>

The experiment was carried out in the same manner as in Example 3, except for adding 1.2 g of the water dispersion of Synthesis Example 2 diluted to a solid content of 10% with water. Table 1 shows the content proportion of each component relative to the pulp in the resulting molded pulp product, as well as the results of evaluation of high temperature oil resistance performance and high temperature water resistance performance.

<Example 8>

The experiment was carried out in the same manner as in Example 4, except for adding 1.2 g of the water dispersion of Synthesis Example 2 diluted to a solid content of 10% with water. Table 1 shows the content proportion of each component relative to the pulp in the resulting molded pulp product, as well as the results of evaluation of high temperature oil resistance performance and high temperature water resistance performance.

<Example 9>

The experiment was carried out in the same manner as in Example 1, except for adding the water dispersion of Synthesis Example 3. Table 1 shows the content proportion of each component relative to the pulp in the resulting molded pulp product, as well as the results of evaluation of high temperature oil resistance performance and high temperature water resistance performance.

<Example 10>

The experiment was carried out in the same manner as in Example 1, except for adding the water dispersion of Synthesis Example 4. Table 1 shows the content proportion of each component relative to the pulp in the resulting molded pulp product, as well as the results of evaluation of high temperature oil resistance performance and high temperature water resistance performance.

<Example 11>

The experiment was carried out in the same manner as in Example 1, except for adding the water dispersion of Synthesis Example 5. Table 1 shows the content proportion of each component relative to the pulp in the resulting molded pulp product, as well as the results of evaluation of high temperature oil resistance performance and high temperature water resistance performance.

<Example 12>

The experiment was carried out in the same manner as in Example 1, except for adding the water dispersion of Synthesis Example 6. Table 1 shows the content proportion of each component relative to the pulp in the resulting molded pulp product, as well as the results of evaluation of high temperature oil resistance performance and high temperature water resistance performance.

<Example 13>

The experiment was carried out in the same manner as in Example 1, except for adding the water dispersion of Synthesis Example 7. Table 1 shows the content proportion of each component relative to the pulp in the resulting molded pulp product, as well as the results of evaluation of high temperature oil resistance performance and high temperature water resistance performance.

<Example 14>

The experiment was carried out in the same manner as in Example 1, except for adding the water dispersion of Synthesis Example 8. Table 1 shows the content proportion of each component relative to the pulp in the resulting molded pulp product, as well as the results of evaluation of high temperature oil resistance performance and high temperature water resistance performance.

<Example 15>

The experiment was carried out in the same manner as in Example 1, except for adding the water dispersion of Synthesis Example 9. Table 1 shows the content proportion of each component relative to the pulp in the resulting molded pulp product, as well as the results of evaluation of high temperature oil resistance performance and high temperature water resistance performance.

<Example 16>

The experiment was carried out in the same manner as in Example 1, except for adding 2.0 g of the water dispersion of Synthesis Example 10 diluted to a solid content of 10% with water. Table 1 shows the content proportion of each component relative to the pulp in the resulting molded pulp product, as well as the results of evaluation of high temperature oil resistance performance and high temperature water resistance performance.

<Example 17>

The experiment was carried out in the same manner as in Example 1, except that the mixture of 70 parts of broad leaf tree bleached kraft pulp and 30 parts of needle leaf tree bleached kraft pulp in Example 1 was replaced by a mixture of 50 parts of bamboo bleached kraft pulp and 50 parts of bagasse bleached kraft pulp. Table 1 shows the content proportion of each component relative to the pulp in the resulting molded pulp product, as well as the results of evaluation of high temperature oil resistance performance and high temperature water resistance performance.

<Example 18>

The experiment was carried out in the same manner as in Example 1, except for adding 2.0 g of the water dispersion of Synthesis Example 11 diluted to a solid content of 10% with water. Table 1 shows the content proportion of each component relative to the pulp in the resulting molded pulp product, as well as the results of evaluation of high temperature oil resistance performance and high temperature water resistance performance.

<Example 19>

The experiment was carried out in the same manner as in Example 1, except for adding 2.0 g of the water dispersion of Synthesis Example 12 diluted to a solid content of 10% with water. Table 1 shows the content proportion of each component relative to the pulp in the resulting molded pulp product, as well as the results of evaluation of high temperature oil resistance performance and high temperature water resistance performance.

<Comparative Example 1>

The experiment was carried out in the same manner as in Example 1, except for adding the water dispersion of Comparative Synthesis Example 1. Table 1 shows the content proportion of each component relative to the pulp in the resulting molded pulp product, as well as the results of evaluation of high temperature oil resistance performance and high temperature water resistance performance.

<Comparative Example 2>

The experiment was carried out in the same manner as in Example 2, except for adding the water dispersion of Comparative Synthesis Example 1. Table 1 shows the content proportion of each component relative to the pulp in the resulting molded pulp product, as well as the results of evaluation of high temperature oil resistance performance and high temperature water resistance performance.

<Comparative Example 3>

The experiment was carried out in the same manner as in Example 3, except for adding the water dispersion of Comparative Synthesis Example 1. Table 1 shows the content proportion of each component relative to the pulp in the resulting molded pulp product, as well as the results of evaluation of high temperature oil resistance performance and high temperature water resistance performance.

<Comparative Example 4>

The experiment was carried out in the same manner as in Example 4, except for adding the water dispersion of Comparative Synthesis Example 1. Table 1 shows the content proportion of each component relative to the pulp in the resulting molded pulp product, as well as the results of evaluation of high temperature oil resistance performance and high temperature water resistance performance.

<Comparative Example 5>

The experiment was carried out in the same manner as in Example 6, except for adding the water dispersion of Comparative Synthesis Example 1. Table 1 shows the content proportion of each component relative to the pulp in the resulting molded pulp product, as well as the results of evaluation of high temperature oil resistance performance and high temperature water resistance performance.

<Comparative Example 6>

The experiment was carried out in the same manner as in Example 7, except for adding the water dispersion of Comparative Synthesis Example 1. Table 1 shows the content proportion of each component relative to the pulp in the resulting molded pulp product, as well as the results of evaluation of high temperature oil resistance performance and high temperature water resistance performance.

<Comparative Example 7>

The experiment was carried out in the same manner as in Example 8, except for adding the water dispersion of Comparative Synthesis Example 1. Table 1 shows the content proportion of each component relative to the pulp in the resulting molded pulp product, as well as the results of evaluation of high temperature oil resistance performance and high temperature water resistance performance.

<Comparative Example 8>

The experiment was carried out in the same manner as in Example 1, except for adding the water dispersion of Comparative Synthesis Example 2. Table 1 shows the content proportion of each component relative to the pulp in the resulting molded pulp product, as well as the results of evaluation of high temperature oil resistance performance and high temperature water resistance performance.

<Comparative Example 9>

The experiment was carried out in the same manner as in Example 1, except for adding the water dispersion of Comparative Synthesis Example 3. Table 1 shows the content proportion of each component relative to the pulp in the resulting molded pulp product, as well as the results of evaluation of high temperature oil resistance performance and high temperature water resistance performance.

<Comparative Example 10>

The experiment was carried out in the same manner as in Example 2, except for adding the water dispersion of Comparative Synthesis Example 3. Table 1 shows the content proportion of each component relative to the pulp in the resulting molded pulp product, as well as the results of evaluation of high temperature oil resistance performance and high temperature water resistance performance.

<Comparative Example 11>

The experiment was carried out in the same manner as in Example 1, except for adding the water dispersion of Comparative Synthesis Example 4. Table 1 shows the content proportion of each component relative to the pulp in the resulting molded pulp product, as well as the results of evaluation of high temperature oil resistance performance and high temperature water resistance performance.

[Table 1-1]

| | | | | Ex.1 Syn.Ex.1 | Ex.2 Syn.Ex.1 | Ex.3 Syn.Ex.1 | Ex.4 Syn.Ex.1 | Ex.5 Syn.Ex.2 | Ex.6 Syn.Ex.2 | Ex.7 Syn.Ex.2 | Ex.8 Syn.Ex.2 | Ex.9 Syn.Ex.3 | Ex.10 Syn.Ex.4 |
|---|---|---|---|---|---|---|---|---|---|---|---|---|---|
| Oil-resistant agent | Copolymer monomer(parts by weight) | Stearic acid amide ethyl acrylate | | 97 | 97 | 97 | 97 | 100 | 100 | 100 | 100 | 97 | 100 |
| | | 4-Hydroxybutyl acrylate | | 3 | 3 | 3 | 3 | | | | | 3 | |
| | | Dimethylaminoethyl methacrylate | | | | | | | | | | | |
| | Emulsifier | Cationic emulsifier | Alkyl bis(2-hydroxyalkyl )methylammonium chloride | | | | | | | | | | |
| | | Anionic emulsifier | Sodium lignosulfonate | ○ | ○ | ○ | ○ | ○ | ○ | ○ | ○ | | |
| | | Nonionic emulsifier | Polyoxyethylene alkyl ether | ○ | ○ | ○ | ○ | ○ | ○ | ○ | ○ | ○ | ○ |
| | Initiator | Oxidizing agent(ammonium persulfate) | | ○ | ○ | ○ | ○ | ○ | ○ | ○ | ○ | ○ | ○ |
| | | Azo group-containing water-soluble initiator | | | | | | | | | | | |
| Pulp composition | Oil-resistant agent | | Solid content(%) | 2.0 | 1.5 | 1.5 | 1.5 | 2.0 | 1.2 | 1.2 | 1.2 | 2.0 | 2.0 |
| | Sizing agent | Alkyl ketene dimer(AKD) | Solid content(%) | | | | 0.15 | | | | 0.15 | | |
| | Paper strength agent | Cationic polyamine(Hercobond6950) | Solid content(%) | 0.16 | 0.16 | | | 0.16 | 0.16 | | | 0.16 | 0.16 |
| | | Amphoteric polyacrylamide(T2) | Solid content(%) | | 0.80 | 0.80 | 0.80 | | 0.80 | 0.80 | 0.80 | | |
| | | Amphoteric polyacrylamide(KS38) | Solid content(%) | | 0.80 | 0.80 | 0.80 | | 0.80 | 0.80 | 0.80 | | |
| | Fixing agent | Aluminum sulfate | Solid content(%) | | | 0.03 | 0.03 | | | 0.03 | 0.03 | | |
| Performance evaluation | High temperature oil resistance | 65°C×45min | Stirring time:1min | 4 | 4 | 4 | 4 | 4 | 4 | 4 | 4 | 4 | 4 |
| | | | Stirring time:120min | 3 | 3 | 3 | 3 | 4 | 4 | 4 | 4 | 3 | 4 |
| | | 80°C×30min | Stirring time:1min | 4 | 4 | 4 | 4 | 4 | 4 | 4 | 4 | 3 | 3 |
| | | | Stirring time:120min | 3 | 3 | 3 | 3 | 4 | 4 | 4 | 4 | 3 | 3 |
| | High temperature water resistance | 100°C×30min | Stirring time:1min | 4 | 4 | 4 | 4 | 4 | 4 | 4 | 4 | 4 | 4 |
| | Oil-resistant agent product stability | | | ○ | ○ | ○ | ○ | ○ | ○ | ○ | ○ | ○ | ○ |

[Table 1-2]

| | | | | Ex.11 Syn.Ex.5 | Ex.12 Syn.Ex.6 | Ex.13 Syn.Ex.7 | Ex.14 Syn.Ex.8 | Ex.15 Syn.Ex.9 | Ex.16 Syn.Ex.10 | Ex.17 Syn.Ex.2 | Ex.18 Syn.Ex.11 | Ex.19 Syn.Ex.12 |
|---|---|---|---|---|---|---|---|---|---|---|---|---|
| Oil-resistant agent | Copolymer monomer(parts by weight) | Stearic acid amide ethyl acrylate | | 97 | 100 | 100 | 93 | 96 | 100 | 100 | 100 | 100 |
| | | 4-Hydroxybutyl acrylate | | 3 | | | 7 | 3 | | | | |
| | | Dimethylaminoethyl methacrylate | | | | | | 1 | | | | |
| | Emulsifier | Cationic emulsifier | Alkyl bis(2-hydroxyalkyl) methylammonium chloride | | | ○ | | | | | | |
| | | Anionic emulsifier | Sodium lignosulfonate | | | | ○ | ○ | ○ | ○ | ○ | ○ |
| | | Nonionic emulsifier | Polyoxyethylene alkyl ether | ○ | ○ | ○ | ○ | ○ | ○ | ○ | ○ | ○ |
| | Initiator | Oxidizing agent (ammonium persulfate) | | | | | ○ | ○ | ○ | ○ | ○ | ○ |
| | | Azo group-containing water-soluble initiator | | ○ | ○ | ○ | | | | | | |
| | Others | Lauric acid | | | | | | | ○ | ○ | | |
| | | Monostearic acid | SS-10V | | | | | | | | ○ | |
| | | Tristearic acid | SS-30V | | | | | | | | | ○ |
| Pulp composition | Oil-resistant agent | | Solid content(%) | 2.0 | 2.0 | 2.0 | 2.0 | 2.0 | 2.0 | 2.0 | 2.0 | 2.0 |
| | Sizing agent | Alkyl ketene dimer(AKD) | Solid content(%) | | | | | | | | | |
| | Paper strength agent | Cationic polyamine(Hercobond6950) | Solid content(%) | 0.16 | 0.16 | 0.16 | 0.16 | 0.16 | 0.16 | 0.16 | 0.16 | 0.16 |
| | | Amphoteric polyacrylamide(T2) | Solid content(%) | | | | | | | | | |
| | | Amphoteric polyacrylamide(KS38) | Solid content(%) | | | | | | | | | |
| | Fixing agent | Aluminum sulfate | Solid content(%) | | | | | | | | | |
| Performance evaluation | High temperature oil resistance | 65°C×45min | Stirring time:1min | 4 | 4 | 4 | 4 | 4 | 4 | 4 | 4 | 4 |
| | | | Stirring time:120min | 3 | 4 | 4 | 3 | 3 | 4 | 4 | 4 | 4 |
| | | 80°C×30min | Stirring time:1min | 3 | 3 | 4 | 3 | 3 | 4 | 4 | 4 | 4 |
| | | | Stirring time:120min | 3 | 3 | 4 | 3 | 3 | 4 | 4 | 4 | 4 |
| | High temperature water resistance | 100°C×30min | Stirring time:1min | 4 | 4 | 4 | 4 | 4 | 4 | 4 | 4 | 4 |
| | Oil-resistant agent product stability | | | ○ | ○ | ○ | ○ | ○ | ○ | ○ | ○ | ○ |

[Table 1-3]

| | | | | Com.Ex.1 Com.Syn. Ex.1 | Com.Ex.2 Com.Syn. Ex.1 | Com.Ex.3 Com.Syn. Ex.1 | Com.Ex.4 Com.Syn .Ex.1 | Com.Ex.5 Com.Syn. Ex.1 | Com.Ex.6 Com.Syn. Ex.1 | Com.Ex.7 Com.Syn. Ex.1 | Com.Ex.8 Com.Syn. Ex.2 | Com.Ex.9 Com.Syn. Ex.3 | Com.Ex.10 Com.Syn. Ex.3 | Com.Ex.11 Com.Syn. Ex.4 |
|---|---|---|---|---|---|---|---|---|---|---|---|---|---|---|
| Oil-resistant agent | Copolymer monomer (parts by weight) | Stearic acid amide ethyl acrylate | | 90 | 90 | 90 | 90 | 90 | 90 | 90 | 90 | 90 | 90 | 90 |
| | | 4-Hydroxybutyl acrylate | | 10 | 10 | 10 | 10 | 10 | 10 | 10 | 7 | 7 | 7 | 7 |
| | | Dimethylaminoethyl methacrylate | | | | | | | | | 3 | 3 | 3 | 3 |
| | Emulsifier | Cationic emulsifier | Alkyl bis(2-hydroxyalkyl) methylammonium chloride | | | | | | | | | ○ | ○ | |
| | | Anionic emulsifier | Sodium lignosulfonate | ○ | ○ | ○ | ○ | ○ | ○ | ○ | ○ | | | |
| | | Nonionic emulsifier | Polyoxyethylene alkyl ether | ○ | ○ | ○ | ○ | ○ | ○ | ○ | ○ | ○ | ○ | ○ |
| | Initiator | Oxidizing agent (ammonium persulfate) | | ○ | ○ | ○ | ○ | ○ | ○ | ○ | ○ | | | |
| | | Azo group-containing water-soluble initiator | | | | | | | | | | ○ | ○ | ○ |
| Pulp composition | Oil-resistant agent | | Solid content(%) | 2.0 | 1.5 | 1.5 | 1.5 | 1.2 | 1.2 | 1.2 | 2.0 | 2.0 | 1.5 | 2.0 |
| | Sizing agent | Alkyl ketene dimer(AKD) | Solid content(%) | | | | 0.15 | | | 0.15 | | | | |
| | Paper strength agent | Cationic polyamine(Hercobond6950) | Solid content(%) | 0.16 | 0.16 | | | 0.16 | | | 0.16 | 0.16 | 0.16 | 0.16 |
| | | Amphoteric polyacrylamide(T2) | Solid content(%) | | 0.80 | 0.80 | 0.80 | 0.80 | 0.80 | 0.80 | | | 0.80 | |
| | | Amphoteric polyacrylamide(KS38) | Solid content(%) | | 0.80 | 0.80 | 0.80 | 0.80 | 0.80 | 0.80 | | | 0.80 | |
| | Fixing agent | Aluminum sulfate | Solid content(%) | | | 0.03 | 0.03 | | 0.03 | 0.03 | | | | |
| Performance evaluation | High temperature oil resistance | 65°C×45min | Stirring time:1min | 4 | 3 | 3 | 3 | 3 | 3 | 3 | 4 | 4 | 3 | 3 |
| | | | Stirring time:120min | 2 | 2 | 2 | 2 | 2 | 2 | 2 | 2 | 2 | 2 | 1 |
| | | 80°C×30min | Stirring time:1min | 4 | 3 | 3 | 3 | 3 | 3 | 3 | 3 | 3 | 3 | 2 |
| | | | Stirring time:120min | 2 | 2 | 2 | 1 | 1 | 1 | 0 | 1 | 1 | 2 | 0 |
| | High temperature water resistance | 100°C×30min | Stirring time:1min | 4 | 4 | 4 | 4 | 4 | 4 | 4 | 4 | 4 | 4 | 3 |
| | Oil-resistant agent product stability | | | ○ | ○ | ○ | ○ | ○ | ○ | ○ | ○ | △ | △ | × |

## Claims

**1.** An oil-resistant agent for pulp, comprising a hydrocarbon group-containing polymer, wherein

the hydrocarbon group-containing polymer has a repeating unit derived from a monomer (a1),
the monomer (a1) is a hydrocarbon group-containing monomer having an NH group-containing group and a hydrocarbon group having 6 or more and 40 or less carbon atoms, and
an amount of the repeating unit derived from the monomer (a1) is more than 90% by weight relative to the polymer.

**2.** The oil-resistant agent for pulp according to claim 1, wherein the hydrocarbon group-containing polymer does not have a fluorine atom.

**3.** The oil-resistant agent for pulp according to claim 1 or 2, wherein the monomer (a1) is a monomer represented by the formula (a1):

$$CH_2=C(-X^{a1})-C(=O)-Y^{a11}-Z(-Y^{a12}-R^{a1})_n$$

wherein $R^{a1}$ is each independently a hydrocarbon group having 6 or more and 40 or less carbon atoms;
$X^{a1}$ is a hydrogen atom, a monovalent organic group or a halogen atom;
$Y^{a11}$ is -O- or -NH-;
$Y^{a12}$ is each independently a direct bond or a group composed of at least one selected from -O-, -C(=O)-, $-S(=O)_2-$, -NH- and $-CH_2-$;
Z is a direct bond or a divalent or trivalent hydrocarbon group having 1 to 5 carbon atoms; and
n is 1 or 2.

**4.** The oil-resistant agent for pulp according to any one of claims 1 to 3, wherein an amount of the repeating unit derived from the monomer (a1) is more than 97% by weight relative to the polymer.

**5.** The oil-resistant agent for pulp according to any one of claims 1 to 4, wherein

an amount of a repeating unit derived from a monomer (b) is 0% by weight or more and less than 7% by weight relative to the polymer, and
the monomer (b) is a hydrophilic monomer having an oxyalkylene-containing group as a hydrophilic group.

**6.** The oil-resistant agent for pulp according to any one of claims 1 to 5, wherein

an amount of a repeating unit derived from a monomer (c) is 0% by weight or more and less than 3% by weight relative to the polymer, and
the monomer (c) is an ionic group-containing monomer.

**7.** The oil-resistant agent for pulp according to any one of claims 1 to 6, wherein the hydrocarbon group-containing polymer is a polymer obtained by emulsion polymerization.

**8.** The oil-resistant agent for pulp according to any one of claims 1 to 7, comprising a dispersant.

**9.** The oil-resistant agent for pulp according to any one of claims 1 to 8, comprising an anionic dispersant.

**10.** The oil-resistant agent for pulp according to any one of claims 1 to 9, comprising a lignin compound.

**11.** The oil-resistant agent for pulp according to any one of claims 1 to 10, comprising an aqueous medium.

**12.** The oil-resistant agent for pulp according to claim 3,
wherein $Y^{a12}$ is -NH-C(=O)-, -C(=O)-NH-, -O-C(=O)-NH-, -NH-C(=O)-O- or -NH-C(=O)-NH-.

**13.** A pulp composition comprising a pulp substrate and the oil-resistant agent for pulp according to any one of claims 1 to 12.

14. The pulp composition according to claim 13, comprising an additive for pulp that is at least one selected from the group consisting of a sizing agent, a paper strength agent and a fixing agent.

15. An oil-resistant pulp product wherein the hydrocarbon group-containing polymer in the oil-resistant agent for pulp according to any one of claims 1 to 12 is adhered to a pulp substrate.

16. The oil-resistant pulp product according to claim 15, which is a pulp molded article.

17. The oil-resistant pulp product according to claim 15 or 16, which is a food packaging material or a food container.

18. A method for producing an oil-resistant pulp product, comprising treating a pulp substrate with the oil-resistant agent according to any one of claims 1 to 12 by an external addition treatment or an internal addition treatment.

19. The method for producing an oil-resistant pulp product according to claim 18, comprising filling a mold with the oil-resistant agent and pulp slurry, and allowing a liquid medium to permeate out of the mold to mold pulp.

## INTERNATIONAL SEARCH REPORT

International application No.
**PCT/JP2025/002276**

### A. CLASSIFICATION OF SUBJECT MATTER

***D21H 17/37***(2006.01)i; ***C08L 33/06***(2006.01)i; ***C08L 97/00***(2006.01)i; ***C08L 101/00***(2006.01)i; ***D21H 21/14***(2006.01)i; ***D21J 3/00***(2006.01)i
FI: D21H17/37; C08L101/00; C08L33/06; C08L97/00; D21H21/14 Z; D21J3/00

According to International Patent Classification (IPC) or to both national classification and IPC

### B. FIELDS SEARCHED

Minimum documentation searched (classification system followed by classification symbols)

D21H17/37; C08L33/06; C08L97/00; C08L101/00; D21H21/14; D21J3/00

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2022/065384 A1 (DAIKIN INDUSTRIES, LTD.) 31 March 2022 (2022-03-31) paragraphs [0008]-[0144] | 1-3, 5-19 |
| Y | | 10-11 |
| A | | 4 |
| X | JP 2023-85358 A (DAIKIN INDUSTRIES, LTD.) 20 June 2023 (2023-06-20) paragraphs [0011]-[0113] | 1-9, 12-19 |
| Y | | 10-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 February 2025** | **11 March 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2025/002276**

| Patent document cited in search report | Publication date (day/month/year) | Patent family member(s) | Publication date (day/month/year) |
|---|---|---|---|
| WO 2022/065384 A1 | 31 March 2022 | US 2023/0220140 A1<br>paragraphs [0008]-[0201]<br>EP 4223764 A1<br>KR 10-2022-0148870 A<br>CN 115515996 A | |
| JP 2023-85358 A | 20 June 2023 | US 2024/0150965 A1<br>paragraphs [0015]-[0323]<br>WO 2023/282302 A1<br>EP 4349922 A1<br>CN 117642468 A<br>KR 10-2024-0016427 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023010656 A


### Non-patent literature cited in the description


- Chemistry of Lignin - Fundamentals and Application - Expanded Ed.. Uni Publishing Co., Ltd., 25 May 1990, 541
- **SENI SENSYOKU** ; **KAKO JITEN**. Japanese; Fiber-dyeing process dictionary. THE NIKKAN KOGYO SHIMBUN, LTD, 1963, 396-397
- **IROZOME KAGAKU**. Japanese; dyeing chemistry. Jikkyo Shuppan Co., Ltd., 1975, 256-260
- **SENSYOKU SHIAGE KIKI SORAN**. Japanese; Comprehensive guide to dyeing and finishing machines. Fiber Japan CO., LTD., 1981, 473-477